# EUROPEAN PATENT APPLICATION

(11) **EP 3 396 960 A1**
(43) Date of publication of application: **31.10.2018**
(21) Application number: 17753487.2
(22) Date of filing: 16.02.2017
(51) Int. Cl.: H04N 19/593, H04N 19/105, H04N 19/176, H04N 19/182

(54) **VIDEO ENCODING METHOD AND APPARATUS, AND DECODING METHOD AND APPARATUS THEREFOR**

(30) Priority: 16.02.2016 US 201662295695 P
(71) Applicant: Samsung Electronics Co., Ltd., Suwon-si, Gyeonggi-do 16677 (KR)
(72) Inventor: JIN, Bo-ra, Yongin-si Gyeonggi-do 16843 (KR); KIM, Chan-yul, Seongnam-si Gyeonggi-do 13479 (KR); PARK, Min-woo, Yongin-si Gyeonggi-do 17079 (KR)
(74) Representative: Appleyard Lees IP LLP
(86) International application number: PCT/KR2017/001717
(87) International publication number: WO 2017/142326

(57) **Abstract**

Provided are a video encoding method and a video encoding apparatus capable of performing the video encoding method. The video encoding method according to an embodiment includes generating a first predicted block by performing intra prediction on a current block by using neighboring pixels of the current block which have been previously encoded and reconstructed; determining a reference block corresponding to the current block and included in a reconstructed pixel region encoded and reconstructed prior to the current block; generating a residual block, based on the reference block; generating a second predicted block by adding residual values of pixels included in the residual block and intra prediction values of pixels included in the first predicted block; determining the first predicted block or the second predicted block to be a predicted block of the current block; and generating a bitstream including residual data of the current block generated from the determined predicted block.

## Description

### TECHNICAL FIELD

The present disclosure relates to a video encoding method and apparatus and a video decoding method and apparatus, and particularly, to a method and apparatus for efficiently performing intra prediction in relation to video coding.

### BACKGROUND ART

With the development and supply of hardware for reproducing and storing high-resolution or high-quality image content, there is a growing need for a video codec for effectively encoding or decoding the high-resolution or high-quality image content. Among video coding techniques, intra prediction is a technique for predicting a current block by referring to already reconstructed samples neighboring the current block. An intra prediction block is generated by performing intra prediction using 35 modes according to an existing video codec, and particularly, high efficient video coding (HEVC). However, although intra prediction is performed using various directions according to the 35 modes, image edge information may remain in a residual component between an original image and a predicted image and thus should be improved. In intra prediction known in the existing video codec, prediction is performed once on a determined mode. However, prediction performance may be enhanced when prediction is performed once more on a predicted block.

### DESCRIPTION OF EMBODIMENTS

### TECHNICAL PROBLEM

Provided are a video encoding/decoding method and apparatus capable of improving intra prediction performance and intra coding efficiency.

### SOLUTION TO PROBLEM

According to an aspect of the present disclosure, a video encoding method includes generating a first predicted block by performing intra prediction on a current block by using neighboring pixels of the current block, which have been previously encoded and reconstructed; determining a reference block corresponding to the current block and included in a reconstructed pixel region encoded and reconstructed prior to the current block; generating a residual block, based on the reference block; generating a second predicted block by adding residual values of pixels included in the residual block and intra prediction values of pixels included in the first predicted block; determining the first predicted block or the second predicted block to be a predicted block of the current block; and generating a bitstream including residual data of the current block generated from the determined predicted block.

According to another aspect of the present disclosure, a video decoding method includes generating a first predicted block by performing intra prediction on a current block by using neighboring pixels of the current block which have been previously encoded and reconstructed; determining a reference block corresponding to the current block and included in a reconstructed pixel region encoded and reconstructed prior to the current block; generating a residual block, based on the reference block; generating a second predicted block by adding residual values of pixels included in the residual block and intra prediction values of pixels included in the first predicted block; determining the first predicted block or the second predicted block to be a predicted block of the current block; and reconstructing the current block by using residual data of the current block obtained from a bitstream and the determined predicted block.

According to another aspect of the present disclosure, a video encoding apparatus includes an intra predictor configured to generate a first predicted block by performing intra prediction on a current block by using neighboring pixels of the current block which have been previously encoded and reconstructed; a residual predictor configured to determine a reference block corresponding to the current block and included in a reconstructed pixel region encoded and reconstructed prior to the current block, generate a residual block, based on the reference block, and generate a second predicted block by adding residual values of pixels included in the residual block and intra prediction values of pixels included in the first predicted block; and a bitstream generator configured to determine the first predicted block or the second predicted block to be a predicted block of the current block and generate a bitstream including residual data of the current block generated from the determined predicted block.

According to another aspect of the present disclosure, a video decoding apparatus includes an intra predictor configured to generate a first predicted block by performing intra prediction on a current block by using neighboring pixels of the current block which have been previously encoded and reconstructed; a residual predictor configured to determine a reference block corresponding to the current block and included in a reconstructed pixel region encoded and reconstructed prior to the current block, generate a residual block, based on the reference block, and generate a second predicted block by adding residual values of pixels included in the residual block and intra prediction values of pixels included in the first predicted block; and a current-block reconstructor configured to determine the first predicted block or the second predicted block to be a predicted block of the current block, and reconstruct the current block by using residual data of the current block obtained from a bitstream and the determined predicted block.

### ADVANTAGEOUS EFFECTS OF DISCLOSURE

In an embodiment, prediction performance may be improved by compensating for an intra prediction error.

### BRIEF DESCRIPTION OF DRAWINGS

FIG. 1A is a block diagram of a video encoding apparatus according to an embodiment.
FIG. 1B is a block diagram of a video decoding apparatus according to an embodiment.
FIG. 2 is a reference diagram for explaining a process of determining a reference block by using template matching, according to an embodiment.
FIG. 3 is a diagram illustrating determining a motion vector of a current block to determine a reference block, according to an embodiment.
FIG. 4 is a diagram illustrating setting a range of search for a reference block, according to an embodiment.
FIG. 5A is a diagram illustrating generating a second predicted block by using a residual block generated based on a reference block, according to an embodiment.
FIG. 5B is a diagram illustrating generating a second predicted block by using a residual block generated based on a reference block, according to another embodiment.
FIG. 6 is a reference diagram for explaining filtering a reconstructed pixel region, according to an embodiment.
FIGS. 7A and 7B are reference diagrams for explaining determining a reference block by using a plurality of candidate blocks, according to an embodiment.
FIG. 8 is a flowchart of a video encoding method according to an embodiment.
FIG. 9 is a flowchart of a video decoding method according to an embodiment.
FIG. 10 illustrates processes of determining at least one coding unit as a current coding unit is partitioned, according to an embodiment.
FIG. 11 illustrates processes of determining at least one coding unit when a coding unit having a non-square shape is partitioned, according to an embodiment.
FIG. 12 illustrates processes of partitioning a coding unit, based on at least one of a block shape information and partition shape information, according to an embodiment.
FIG. 13 illustrates a method of determining a certain coding unit from among an odd number of coding units, according to an embodiment.
FIG. 14 illustrates an order of processing a plurality of coding units when the plurality of coding units are determined by partitioning a current coding unit, according to an embodiment.
FIG. 15 illustrates processes of determining that a current coding unit is partitioned into an odd number of coding units when coding units are not processable in a certain order, according to an embodiment.
FIG. 16 illustrates processes of determining at least one coding unit by partitioning a first coding unit, according to an embodiment.
FIG. 17 illustrates that a shape into which a second coding unit is partitionable is restricted when the second coding unit having a non-square shape determined when a first coding unit is partitioned satisfies a certain condition, according to an embodiment.
FIG. 18 illustrates processes of partitioning a coding unit having a square shape when partition shape information is unable to indicate that a coding unit is partitioned into four square shapes, according to an embodiment.
FIG. 19 illustrates that an order of processing a plurality of coding units may be changed according to processes of partitioning a coding unit, according to an embodiment.
FIG. 20 illustrates processes of determining a depth of a coding unit as a shape and size of the coding unit are changed, when a plurality of coding units are determined when the coding unit is recursively partitioned, according to an embodiment.
FIG. 21 illustrates a part index (PID) for distinguishing depths and coding units, which may be determined according to shapes and sizes of coding units, according to an embodiment.
FIG. 22 illustrates that a plurality of coding units are determined according to a plurality of certain data units included in a picture, according to an embodiment.
FIG. 23 illustrates a processing block serving as a criterion of determining a determination order of at least one reference coding units included in a picture, according to an embodiment.

### BEST MODE

A video encoding method according to an embodiment may include generating a first predicted block by performing intra prediction on a current block by using neighboring pixels of the current block which have been previously encoded and reconstructed; determining a reference block corresponding to the current block and included in a reconstructed pixel region encoded and reconstructed prior to the current block; generating a residual block, based on the reference block; generating a second predicted block by adding residual values of pixels included in the residual block and intra prediction values of pixels included in the first predicted block; determining the first predicted block or the second predicted block to be a predicted block of the current block; and generating a bitstream including residual data of the current block generated from the determined predicted block.

In an embodiment, the determining of the reference block corresponding to the current block and included in the reconstructed pixel region may include determining a template of the current block; determining pixels matching the template and included in the reconstructed pixel region; and determining the reference block, based on the pixels matching the template.

In an embodiment, the determining of the reference block corresponding to the current block and included in the reconstructed pixel region may include determining a position of the reference block in the reconstructed pixel region; and determining a motion vector of the current block, based on a position of the current block and the position of the reference block.

In an embodiment, the determining of the reference block corresponding to the current block and included in the reconstructed pixel region may include determining a range of search for the reference block in the reconstructed pixel region; and determining the reference block by searching the determined range of search for the reference block.

In an embodiment, the generating of the residual block based on the reference block reference block may include generating a third predicted block of the reference block by applying the same intra prediction mode as the current block to the reference block by using neighboring pixels of the reference block; and generating the residual block from a difference between values of the reference block and the third predicted block.

In an embodiment, the video encoding method may further include filtering the reconstructed pixel region.

In an embodiment, the filtering of the reconstructed pixel region may include filtering the reconstructed pixel region by using one of a Gaussian filter, a median filter, and a bilateral filter.

In an embodiment, the filtering of the reconstructed pixel region may include determining a direction of the filtering, based on an intra prediction mode used for the current block; and filtering the reconstructed pixel region, based on the determined direction.

In an embodiment, the determining of the reference block corresponding to the current block and included in the reconstructed pixel region may include determining a plurality of candidate blocks in the reconstructed pixel region; and determining the reference block by performing weighted averaging on the plurality of candidate blocks.

In an embodiment, the determining of the first predicted block or the second predicted block to be the predicted block of the current block may include calculating rate-distortion costs of each of the first predicted block and the second predicted block; and selecting the first predicted block or the second predicted block, based on the calculated rate-distortion costs.

A video encoding apparatus according to an embodiment includes an intra predictor configured to generate a first predicted block by performing intra prediction on a current block by using neighboring pixels of the current block which have been previously encoded and reconstructed; a residual predictor configured to determine a reference block corresponding to the current block and included in a reconstructed pixel region encoded and reconstructed prior to the current block, generate a residual block, based on the reference block, and generate a second predicted block by adding residual values of pixels included in the residual block and intra prediction values of pixels included in the first predicted block; and a bitstream generator configured to determine the first predicted block or the second predicted block to be a predicted block of the current block and generate a bitstream including residual data of the current block generated from the determined predicted block.

In an embodiment, the residual predictor may be further configured to generate a third predicted block of the reference block by applying the same intra prediction mode as the current block to the reference block by using neighboring pixels of the reference block and generate the residual block from a difference between values of the reference block and the third predicted block.

A video decoding method according to an embodiment includes generating a first predicted block by performing intra prediction on a current block by using neighboring pixels of the current block which have been previously encoded and reconstructed; determining a reference block corresponding to the current block and included in a reconstructed pixel region encoded and reconstructed prior to the current block; generating a residual block, based on the reference block; generating a second predicted block by adding residual values of pixels included in the residual block and intra prediction values of pixels included in the first predicted block; determining the first predicted block or the second predicted block to be a predicted block of the current block; and reconstructing the current block by using residual data of the current block obtained from a bitstream and the determined predicted block.

In an embodiment, the determining of the reference block corresponding to the current block and included in the reconstructed pixel region may include determining a motion vector of the current block, based on motion vector information obtained from the bitstream; and determining the reference block indicated by the motion vector of the current block and included in the reconstructed pixel region.

A video decoding apparatus according to an embodiment includes an intra predictor configured to generate a first predicted block by performing intra prediction on a current block by using neighboring pixels of the current block which have been previously encoded and reconstructed; a residual predictor configured to determine a reference block corresponding to the current block and included in a reconstructed pixel region encoded and reconstructed prior to the current block, generate a residual block, based on the reference block, and generate a second predicted block by adding residual values of pixels included in the residual block and intra prediction values of pixels included in the first predicted block; and a current-block reconstructor configured to determine the first predicted block or the second predicted block to be a predicted block of the current block, and reconstruct the current block by using residual data of the current block obtained from a bitstream and the determined predicted block.

### MODE OF DISCLOSURE

However, the present disclosure is not limited to these embodiments and may be embodied in many different forms. These embodiments are merely provided so that this disclosure will be thorough and complete and will fully convey the scope of the present disclosure to those of ordinary skill in the art.

The terms used herein will be briefly described and then the present disclosure will be described in detail.

In the present disclosure, general terms that have been widely used nowadays are selected, if possible, in consideration of functions of the present disclosure, but non-general terms may be selected according to the intentions of technicians in the art, precedents, or new technologies, etc. Some terms may be arbitrarily chosen by the present applicant. In this case, the meanings of these terms will be explained in corresponding parts of the present disclosure in detail. Thus, the terms used herein should be defined not based on the names thereof but based on the meanings thereof and the whole context of the present specification.

As used herein, the singular forms "a", "an" and "the" are intended to include the plural forms as well, unless the context clearly indicates otherwise

It will be understood that when an element is referred to as including another element, the element can further include other elements unless mentioned otherwise. The term "unit" used herein should be understood as software or a hardware component, such as a FPGA or an ASIC, which performs certain functions. However, the term "unit" is not limited to software or hardware. The term "unit" may be configured to be stored in an addressable storage medium or to reproduce one or more processors. Thus, for example, the term "unit" may include components, such as software components, object-oriented software components, class components, and task components, functions, attributes, procedures, subroutines, segments of program code, drivers, firmware, microcode, a circuit, data, database, data structures, tables, arrays, and variables. Functions provided in components and "units" may be combined to obtain a small number of components and "units" or divided into sub-components and "sub-units".

Hereinafter, the term "image" should be understood to include a static image, such as a still image of a video, and a moving picture, i.e., a dynamic image, which is a video.

The term "sample" should be understood as data allocated to a video sampling position, i.e., data to be processed. For example, pixel values of an image in a spatial domain and transformation coefficients in a transformation domain may be samples. A unit including such at least one sample may be defined as a block.

Embodiments of the present disclosure will be described in detail with reference to the accompanying drawings below such that those of ordinary skill in the art can easily implement them. In the drawings, for clarity, parts that are not related to describing the present disclosure are omitted.

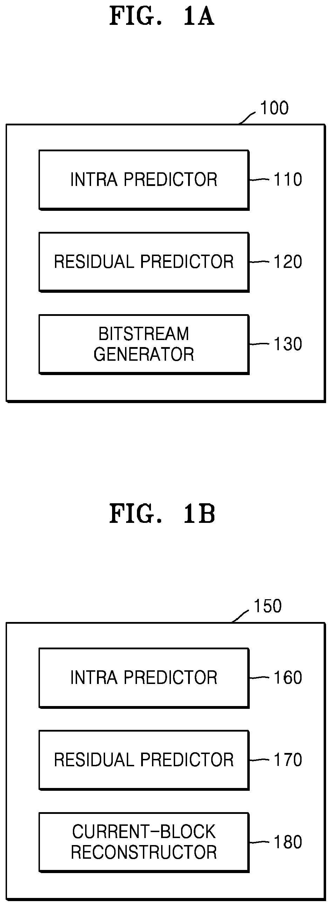

FIG. 1A is a block diagram of a video encoding apparatus according to an embodiment.

As illustrated in FIG. 1A, a video encoding apparatus 100 according to an embodiment may include an intra predictor 110, a residual predictor 120, and a bitstream generator 130.

The intra predictor 110 may generate a first predicted block by performing intra prediction on a current block by using neighboring pixels of the current block, which have been previously encoded and reconstructed.

In an embodiment, the current block may be a coding unit, a prediction unit, or a transformation unit.

In an embodiment, the neighboring pixels of the current block may be a certain number of pixels neighboring the current block. For example, when the current block has a size of n×n, the neighboring pixels used for intra prediction may include 2n pixels adjacent to an upper side of the current block, 2n pixels adjacent to a left side of the current block, and one pixel adjacent to an upper left side of the current block. However, the neighboring pixels used for intra prediction are not limited thereto and may have various sizes and shapes.

In an embodiment, the intra predictor 110 may perform intra prediction on the current block by using an intra prediction mode determined from among a certain number of intra prediction modes.

In an embodiment, the intra predictor 110 may generate the first predicted block by performing intra prediction only when a specific condition is satisfied. For example, the intra predictor 110 may generate the first predicted block by performing intra prediction only when the current block has a specific partition mode and has a specific block size.

The residual predictor 120 may determine a reference block corresponding to the current block and included in a reconstructed pixel region encoded and reconstructed prior to the current block.

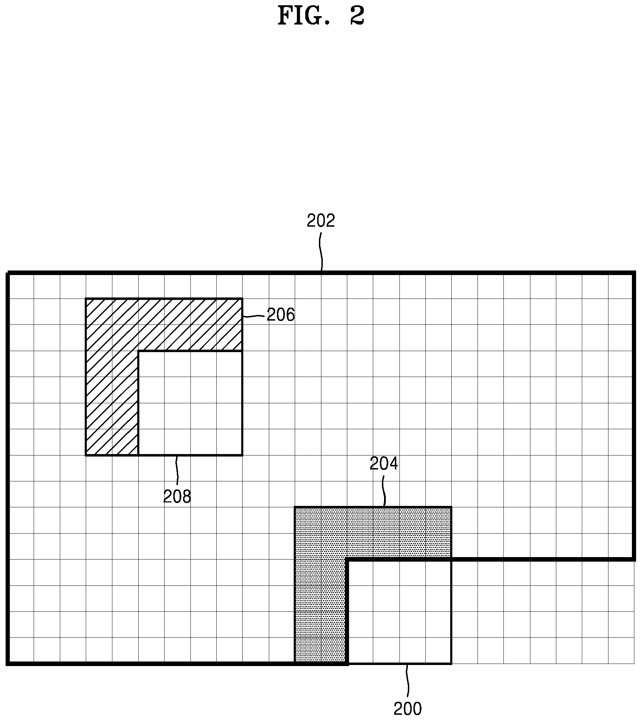

In an embodiment, the residual predictor 120 may determine the reference block included in the reconstructed pixel region by performing template matching, as will be described with reference to FIG. 2 below.

In an embodiment, the residual predictor 120 may determine, as a reference block, a block having pixel values of which the differences with pixel values of the current block are a minimum.

In an embodiment, the residual predictor 120 may determine a position of the reference block in the reconstructed pixel region and determine a motion vector of the current block, based on a position of the current block and the position of the reference block. Motion vector information may be generated based on the determined motion vector and be included into a bitstream.

In an embodiment, the residual predictor 120 may search a residual domain for the reference block included in the reconstructed pixel region. That is, the reference block included in the reconstructed pixel region may be determined using residual values of pixels included in the current block and residual values of pixels included in reconstructed pixel region.

In an embodiment, the residual predictor 120 may determine a range of search for the reference block in the reconstructed pixel region and determine the reference block by searching the range of search for the reference block.

The residual predictor 120 may generate a residual block, based on the determined reference block.

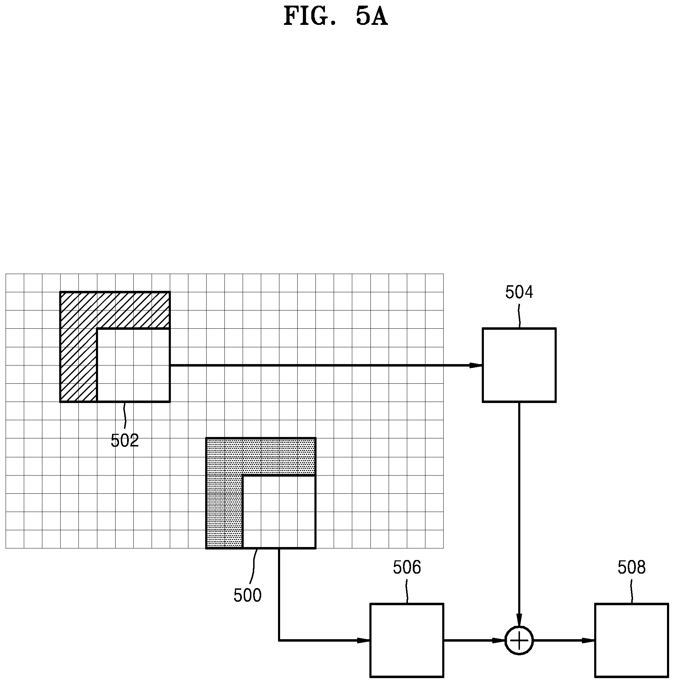

In an embodiment, the residual predictor 120 may obtain a residual value of the reference block determined in the reconstructed pixel region and generate the residual block by using the obtained residual value, as will be described with reference to FIG. 5A below.

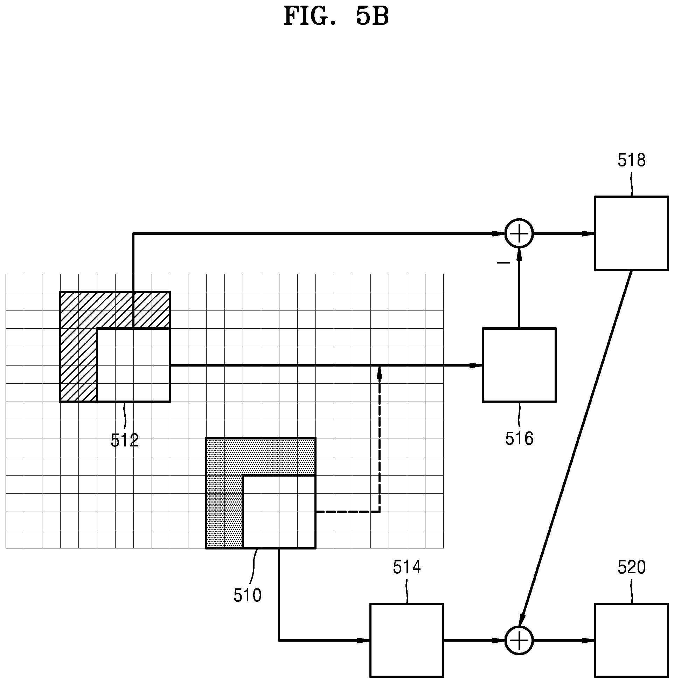

In an embodiment, the residual predictor 120 may generate a third predicted block of the reference block by applying the same intra prediction mode as the current block to the reference block by using neighboring pixels of the reference block and generate the residual block from the difference between values of the reference block and the third predicted block, as will be described with reference to FIG. 5B below.

The residual predictor 120 may generate a second predicted block by adding residual values of pixels included in the residual block and intra prediction values of pixels of the first predicted block.

The bitstream generator 130 may determine the first predicted block or the second predicted block to be a predicted block of the current block.

In an embodiment, the bitstream generator 130 may calculate rate-distortion costs of each of the first predicted block and the second predicted block and select the first predicted block or the second predicted block, based on the calculated rate-distortion costs.

In an embodiment, when the second predicted block among the first predicted block and the second predicted block is determined to be a predicted block of the current block, the bitstream generator 130 may include information indicating whether the second predicted block is to be generated into the bitstream.

In an embodiment, the information indicating whether the second predicted block of the current block is to be generated may be referred to as information indicating whether residual prediction is to be performed, and may be signaled in units of coding units, prediction units, or transformation units.

In an embodiment, the second predicted block may be determined to be generated only when the current block has the specific partition mode or the specific block size.

The bitstream generator 130 may generate a bitstream including the residual data of the current block generated from the determined predicted block. The generated bitstream may be transmitted to a decoding apparatus.

FIG. 1B is a block diagram of a video decoding apparatus according to an embodiment.

As illustrated in FIG. 1B, a video decoding apparatus 150 according to an embodiment may include an intra predictor 160, a residual predictor 170, and a current-block reconstructor 180.

The intra predictor 160 may generate a first predicted block by performing intra prediction on a current block by using neighboring pixels of the current block which have been previously decoded and reconstructed.

In an embodiment, the intra predictor 160 may determine an intra prediction mode of the current block, based on information indicating the intra prediction mode and obtained from a bitstream, and perform intra prediction by using the determined intra prediction mode.

In an embodiment, the residual predictor 170 may determine whether a second predicted block of the current block is to be generated, based on second predicted block generation information obtained from the bitstream. When it is determined based on the second predicted block generation information that the second predicted block of the current block is not to be generated, the residual predictor 170 may skip determination of a reference block and generation of a residual block for generating the second predicted block. Alternatively, when it is determined based on the second predicted block generation information that the second predicted block of the current block is not to be generated, the residual predictor 170 may determine a reference block and generate a residual block to generate the second predicted block second predicted block, as will be described below.

The residual predictor 170 may determine a reference block corresponding to the current block and included in a reconstructed pixel region decoded and reconstructed prior to the current block.

The residual predictor 170 may generate a residual block, based on the reference block.

The residual predictor 170 may generate a second predicted block by adding residual values of pixels included in the residual block and intra prediction values of pixels included in the first predicted block.

Parts related to the intra predictor 160 and the residual predictor 170 of the video decoding apparatus 150 which are the same as those of the intra predictor 110 and the residual predictor 120 of the video encoding apparatus 100 will not be redundantly described herein.

The current-block reconstructor 180 may determine the first predicted block or the second predicted block to be a predicted block of the current block. In an embodiment, the first predicted block or the second predicted block may be determined to be a predicted block of the current block, based on the second predicted block generation information related to the current block and obtained from the bitstream.

The current-block reconstructor 180 may reconstruct the current block by using residual data of the current block obtained from the bitstream and the determined predicted block.

FIG. 2 is a reference diagram for explaining a process of determining a reference block by using template matching, according to an embodiment.

Referring to FIG. 2, a template 204 for a current block 200 may be determined. The template 204 illustrated in FIG. 2 is in a form surrounding a left side and an upper side of the current block 200 to a thickness of two pixels. However, the template 204 is not limited to the shape and size illustrated in FIG. 2 and may include a certain number of pixels having various shapes and sizes. The template 204 may be included in a reconstructed pixel region 202.

Referring back to FIG. 2, in the reconstructed pixel region 202, pixels 206 matching the template 204 may be determined. FIG. 2 illustrates that the pixels 206 matching the template 204 have the same size and shape as the template 204 but are not limited thereto and may have various other sizes and shapes.

In an embodiment, the pixels 206 matching the template 204 may be determined using values of samples of the template 204 and values of samples included in the reconstructed pixel region 202. Degrees of similarity between pixels and the template 204 may be calculated in various ways, and pixels having higher degrees of similarity may be determined as the pixels 206.

In an embodiment, the pixels 206 matching the template 204 may be searched for in a residual domain. The pixels 206 matching the template 204 may be determined using residual values of pixels included in the template 204 and residual values of pixels included in the reconstructed pixel region 202.

Referring back to FIG. 2, a reference block 208 may be determined, based on the pixels 206 matching the template 204. In an embodiment, the reference block 208 may be determined using the pixels 206 matching the template 204, based on a relation between positions of the template 204 and the current block 200.

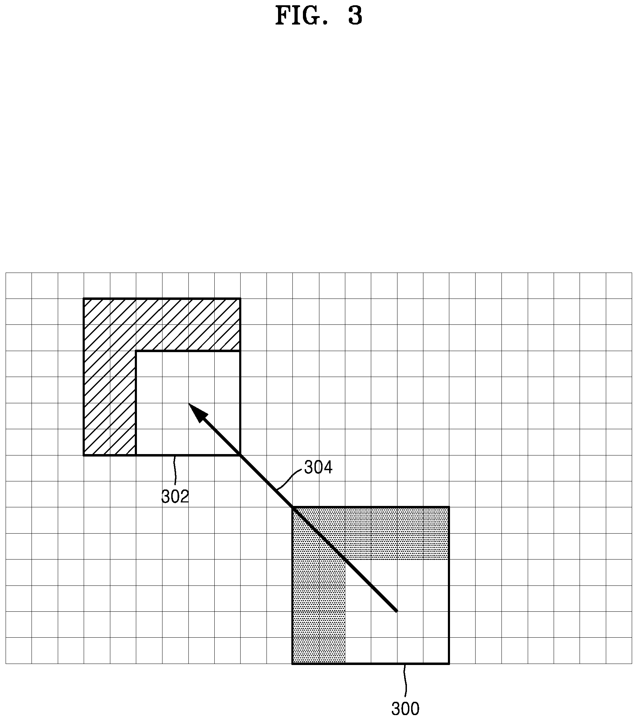

FIG. 3 is a diagram illustrating determining a motion vector of a current block to determine a reference block, according to an embodiment.

Referring to FIG. 3, in a reconstructed pixel region, a reference block 302 corresponding to a current block 300 may be determined. A position of the reference block 302 may be determined by determining the reference block 302.

Referring back to FIG. 3, a motion vector 304 of the current block 300 may be determined, based on a position of the current block 300 and the position of the reference block 302. When encoding is performed, a bitstream including motion vector information may be generated from the determined motion vector 304. When decoding is performed, the motion vector 304 may be reconstructed by obtaining the motion vector information from the bitstream, and the reference block 302 indicated by the motion vector 304 may be determined, based on the reconstructed motion vector 304.

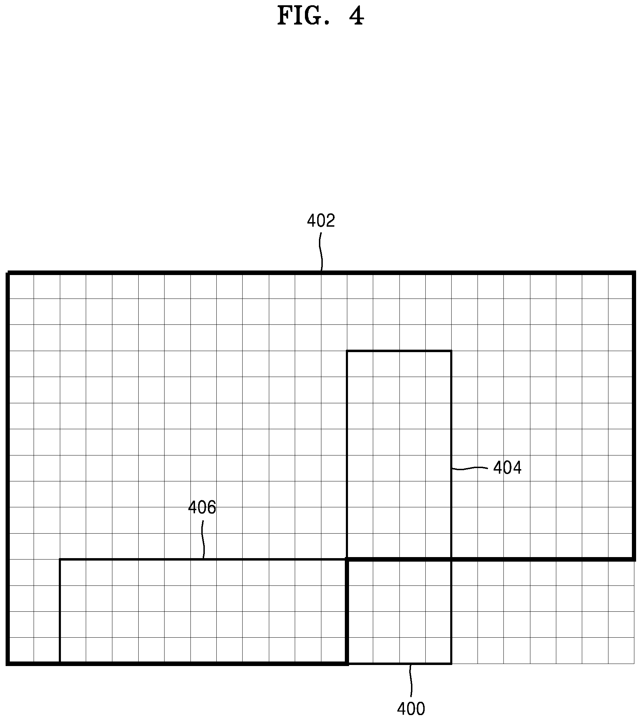

FIG. 4 is a diagram illustrating setting a range of search for a reference block, according to an embodiment.

As illustrated in FIG. 4, a range of search for a reference block corresponding to a current block 400 may be determined in a reconstructed pixel region 402, and a reference block may be determined by searching for it in the range of search.

Referring to FIG. 4, for example, the current block 400 may have a size of 4×4. In the reconstructed pixel region 402, an upper region 404 and a left region 406 adjacent to the current block 400 may form the range of search for a reference block. The upper region 404 may range from the current block 400 to a location distant by eight pixels upward from the current block 400. The left region 406 may range from the current block 400 to a location distant by twelve pixels from the current block 400 in a left direction.

However, the range of search for a reference block is not limited to the above-described embodiment and may have various sizes and shapes. In this embodiment, a certain number of pixels may be variously set, and a shape of the range of search is not limited to upper and left pixels and the range of search may have various shapes such as a square shape and a diamond shape. In an embodiment, the range of search may correspond to the entire reconstructed pixel region 402.

In an embodiment, interpolation may be performed on the reconstructed pixel region 402 to generate an interpolation region including original pixels of the reconstructed pixel region 402 and a certain number of sub-pixels located between the original pixels, and a reference block may be determined by searching the interpolation region.

FIG. 5A is a diagram illustrating generating a second predicted block by using a residual block generated based on a reference block, according to an embodiment.

Referring to FIG. 5A, a first predicted block 506 may be generated by performing intra prediction on a current block 500 by using neighboring pixels of the current block 500. In a reconstructed pixel region, a reference block 502 corresponding to the current block 500 may be determined. The generation of the first predicted block 506 and the determination of the reference block 502 are as described above in detail with respect to the previous embodiments.

Referring back to FIG. 5A, a residual block 504 may be generated using residual values of the determined reference block 502. A second predicted block 508 may be generated by adding residual values of pixels included in the residual block 504 and intra prediction values of pixels included in the first predicted block 506.

FIG. 5B is a diagram illustrating generating a second predicted block by using a residual block generated based on a reference block, according to another embodiment.

Referring to FIG. 5B, a first predicted block 514 may be generated, a reference block 512 may be determined, and a second predicted block 520 may be generated using the first predicted block 514 and a residual block 518 as described above with respect to the embodiment of FIG. 5A. However, the generation of the residual block 518 based on the reference block 512 is different from that in the embodiment of FIG. 5A.

Referring back to FIG. 5B, the first predicted block 514 may be determined by performing intra prediction on a current block 510 by using neighboring pixels of the current block 510. In a reconstructed pixel region, the reference block 512 corresponding to the current block 510 may be determined.

Referring back to FIG. 5B, a third predicted block 516 of the reference block 512 may be generated by applying an intra prediction mode, which is the same as the current block 510, to the reference block 512 by using neighboring pixels of the reference block 512. The residual block 518 may be generated by calculating the differences between sample values of the reference block 512 and intra prediction values of the third predicted block 516. A second predicted block 520 may be generated by adding residual values of pixels included in the residual block 518 and intra prediction values of pixels included in the first predicted block 514.

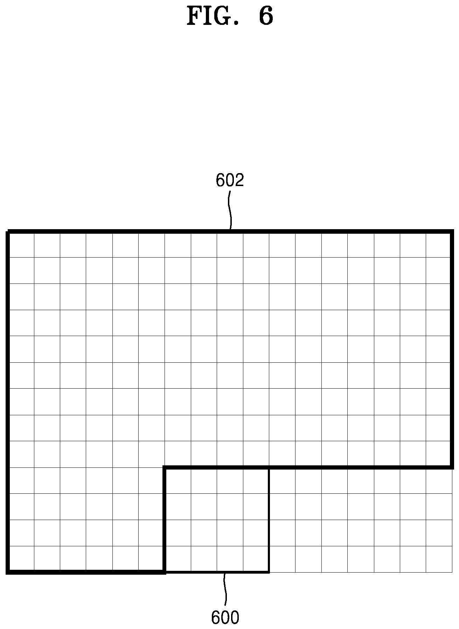

FIG. 6 is a reference diagram for explaining filtering a reconstructed pixel region, according to an embodiment.

As illustrated in FIG. 6, a reconstructed pixel region 602 may be located with respect to a current block 600 and the reconstructed pixel region 602 may be filtered.

In an embodiment, the reconstructed pixel region 602 may be filtered before a first predicted block is generated by performing intra prediction on the current block 600.

In another embodiment, the reconstructed pixel region 602 may be filtered after the first predicted block is generated by performing intra prediction on the current block 600 and before a second predicted block is generated by performing residual prediction using a reference block included in the reconstructed pixel region 602.

In an embodiment, the reconstructed pixel region 602 may be filtered using a Gaussian filter, a median filter, and a bilateral filter.

In an embodiment, a direction of filtering may be determined, based on an intra prediction mode used for the current block 600. The reconstructed pixel region 602 may be filtered, based on the determined direction. For example, when the intra prediction mode used for the current block 600 is a vertical mode, the direction of filtering may be determined to be a vertical direction and the reconstructed pixel region 602 may be filtered in a vertical direction. As another example, when the intra prediction mode used for the current block 600 is a direct-current (DC) mode, the direction of filtering may be non-directional and mean filtering may be performed on the reconstructed pixel region 602.

In an embodiment, various types of filtering performed on the reconstructed pixel region 602 described above may be applied to residual values of pixels included in the reconstructed pixel region 602. For example, the residual values of the pixels of the reconstructed pixel region 602 may be scaled by multiplying the residual values by a value which is less than 1 or multiplying the residual values by different values, or may be clipped.

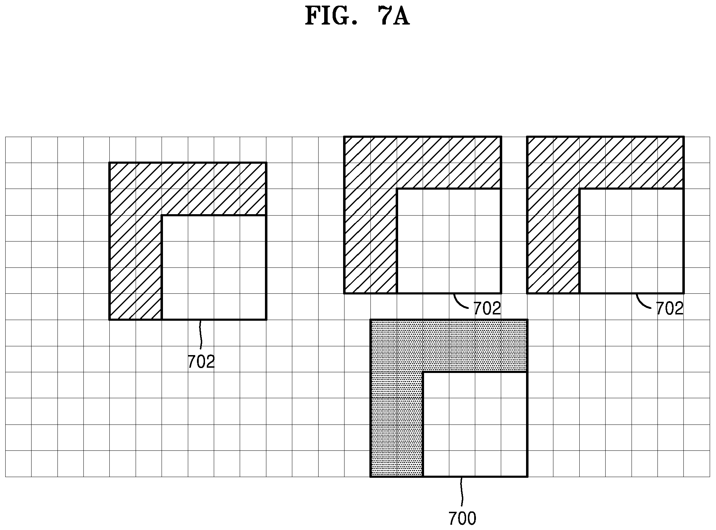

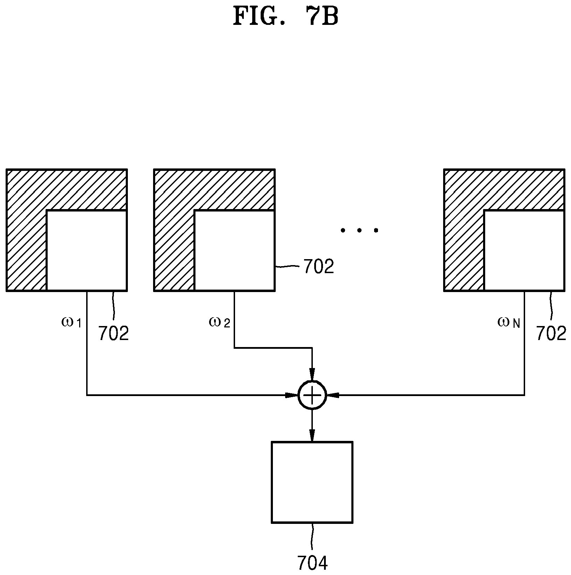

FIGS. 7A and 7B are reference diagrams for explaining determining a reference block by using a plurality of candidate blocks, according to an embodiment.

Referring to FIG. 7A, in a reconstructed pixel region, a plurality of candidate blocks 702 may be determined to determine a reference block corresponding to a current block 700. In an embodiment, template matching described above with reference to FIG. 2 may be used to determine the plurality of candidate blocks 702 included in the reconstructed pixel region. In an embodiment, in the reconstructed pixel region, a certain number of candidate blocks may be determined according to an order of similarity with either the current block 700 or a template of the current block 700.

Referring to FIG. 7B, a reference block 704 may be generated by performing weighted averaging by respectively multiplying the plurality of determined candidate blocks 702 by weights w1, w2, ..., wn, adding results of the multiplication, and calculating an average value.

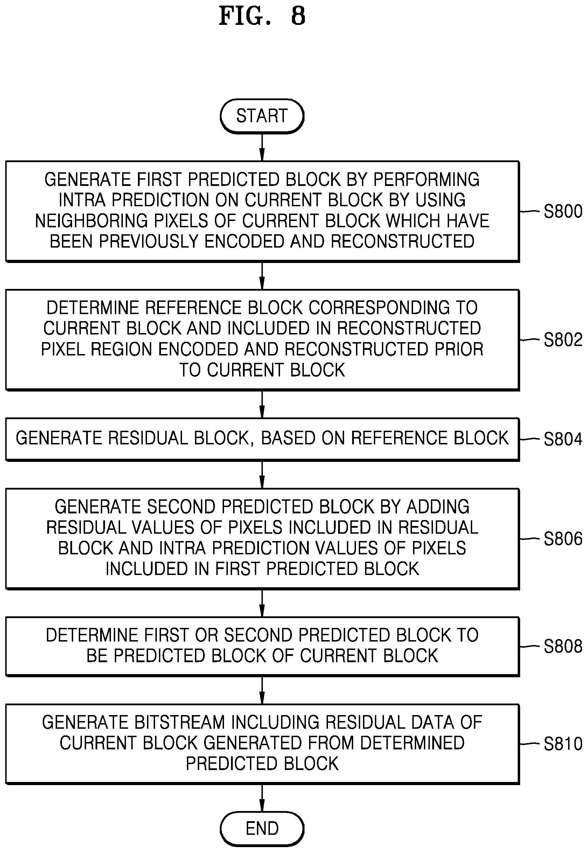

FIG. 8 is a flowchart of a video encoding method according to an embodiment.

In operation S800, the intra predictor 110 of the video encoding apparatus 100 may generate a first predicted block by performing intra prediction on a current block by using neighboring pixels of the current block which have been previously encoded and reconstructed.

In operation S802, the residual predictor 120 of the video encoding apparatus 100 may determine a reference block corresponding to the current block and included in a reconstructed pixel region encoded and reconstructed prior to the current block.

In operation S804, the residual predictor 120 of the video encoding apparatus 100 may generate a residual block, based on the reference block.

In operation S806, the residual predictor 120 of the video encoding apparatus 100 may generate a second predicted block by adding residual values of pixels included in the residual block and intra prediction values of pixels included in the first predicted block.

In operation S808, the bitstream generator 130 of the video encoding apparatus 100 may determine the first predicted block or the second predicted block to be a predicted block of the current block.

In operation S810, the bitstream generator 130 of the video encoding apparatus 100 may generate a bitstream including residual data of the current block generated from the determined predicted block.

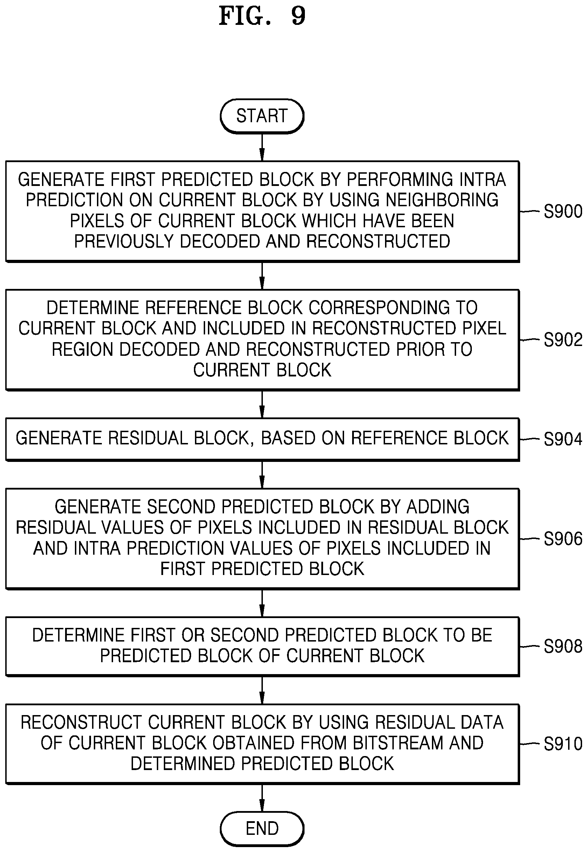

FIG. 9 is a flowchart of a video decoding method according to an embodiment.

In operation S900, the intra predictor 160 of the video decoding apparatus 150 may generate a first predicted block by performing intra prediction on the current block by using neighboring pixels of the current block which have been previously decoded and reconstructed.

In operation S902, the residual predictor 170 of the video decoding apparatus 150 may determine a reference block corresponding to the current block and included in a reconstructed pixel region decoded and reconstructed prior to the current block.

In operation S904, the residual predictor 170 of the video decoding apparatus 150 may generate a residual block, based on the reference block.

In operation S906, the residual predictor 170 of the video decoding apparatus 150 may generate a second predicted block by adding residual values of pixels included in the residual block and intra prediction values of pixels included in the first predicted block.

In operation S908, the current-block reconstructor 180 of the video decoding apparatus 150 may determine the first predicted block or the second predicted block to be a predicted block of the current block.

In operation S910, the current-block reconstructor 180 of the video decoding apparatus 150 may reconstruct the current block by using residual data of the current block obtained from a bitstream and the determined predicted block.

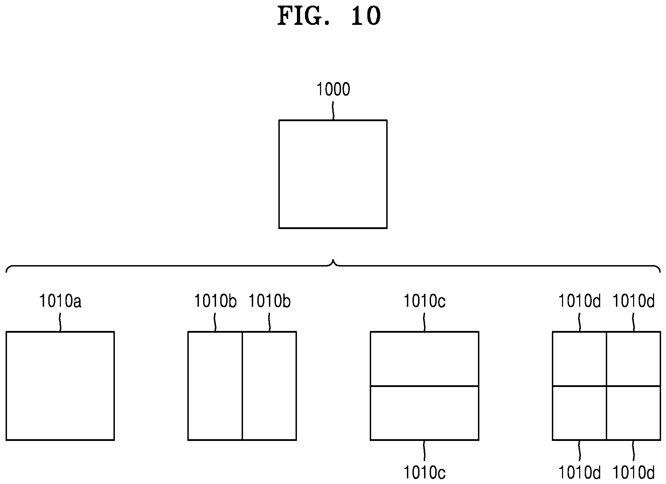

Hereinafter, a method of determining a data unit that is usable when the video decoding apparatus 150 according to an embodiment decodes an image will now be described with reference to FIGS. 10 through 23. Operations of the image encoding apparatus 600 may be similar to or reverse of various embodiments about operations of the video decoding apparatus 150 described below.

FIG. 10 illustrates processes of determining at least one coding unit as the video decoding apparatus 150 partitions a current coding unit, according to an embodiment.

According to an embodiment, the video decoding apparatus 150 may determine a shape of a coding unit by using block shape information, and determine into which shape a coding unit is partitioned by using partition shape information. That is, a coding unit partitioning method that is indicated by the partition shape information may be determined based on a block shape indicated by the block shape information used by the video decoding apparatus 150.

According to an embodiment, the video decoding apparatus 150 may use block shape information indicating that a current coding unit has a square shape. For example, the video decoding apparatus 150 may determine, according to partition shape information, whether to not partition a square coding unit, to partition the square coding unit vertically, to partition the square coding unit horizontally, or to partition the square coding unit into four coding units. Referring to FIG. 10, when block shape information of a current coding unit 1000 indicates a square shape, the video decoding apparatus 150 may not partition a coding unit 1010a having the same size as the current coding unit 1000 according to partition shape information indicating non-partition, or determine coding units 1010b, 1010c, or 1010d based on partition shape information indicating a certain partitioning method.

Referring to FIG. 10, the video decoding apparatus 150 may determine two coding units 1010b by partitioning the current coding unit 1000 in a vertical direction based on partition shape information indicating partitioning in a vertical direction, according to an embodiment. The video decoding apparatus 150 may determine two coding units 1010c by partitioning the current coding unit 1000 in a horizontal direction based on partition shape information indicating partitioning in a horizontal direction. The video decoding apparatus 150 may determine four coding units 1010d by partitioning the current coding unit 1000 in vertical and horizontal directions based on partition shape information indicating partitioning vertical and horizontal directions. However, a partition shape into which a square coding unit may be partitioned is not limited to the above shapes, and may include any shape indicatable by partition shape information. Certain partition shapes into which a square coding unit are partitioned will now be described in detail through various embodiments.

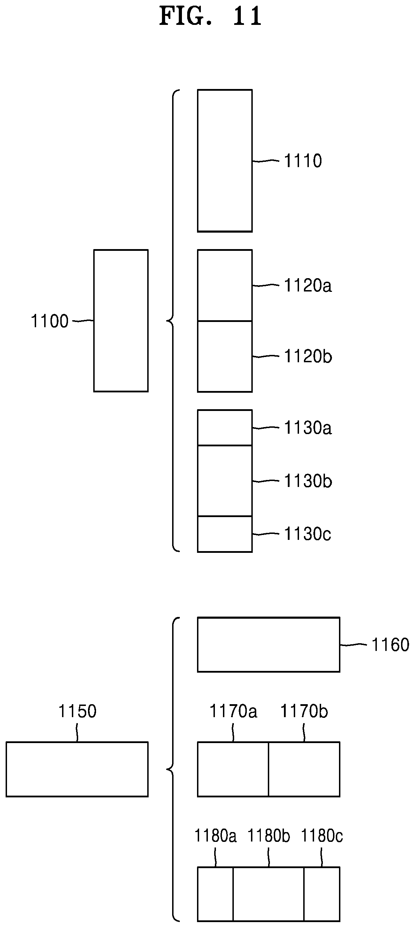

FIG. 11 illustrates processes of determining at least one coding unit as the video decoding apparatus 150 partitions a coding unit having a non-square shape, according to an embodiment.

According to an embodiment, the video decoding apparatus 150 may use block shape information indicating that a current coding unit has a non-square shape. The video decoding apparatus 150 may determine, according to partition shape information, whether to not partition the non-square current coding unit or to partition the non-square current coding unit via a certain method. Referring to FIG. 11, when block shape information of a current coding unit 1100 or 1150 indicates a non-square shape, the video decoding apparatus 150 may not partition coding units 1110 or 1160 having the same size as the current coding unit 1100 or 1150 according to partition shape information indicating non-partition, or determine coding units 1120a, 1120b, 1130a, 1130b, 1130c, 1170a, 1170b, 1180a, 1180b, and 1180c based on partition shape information indicating a certain partitioning method. A certain partitioning method of partitioning a non-square coding unit will now be described in detail through various embodiments.

According to an embodiment, the video decoding apparatus 150 may determine a shape into which a coding unit is partitioned by using partition shape information, and in this case, the partition shape information may indicate the number of at least one coding units generated as the coding unit is partitioned. Referring to FIG. 11, when partition shape information indicates that the current coding unit 1100 or 1150 is partitioned into two coding units, the video decoding apparatus 150 may determine two coding units 1120a and 1120b or 1170a and 1170b included in the current coding unit 1100 or 1150 by partitioning the current coding unit 1100 or 1150 based on the partition shape information.

According to an embodiment, when the video decoding apparatus 150 partitions the current coding unit 1100 or 1150 having a non-square shape based on partition shape information, the video decoding apparatus 150 may partition the current coding unit 1100 or 1150_while considering locations of long sides of the current coding unit 1100 or 1150 having a non-square shape. For example, the video decoding apparatus 150 may determine a plurality of coding units by partitioning the current coding unit 1100 or 1150 in a direction of partitioning the long sides of the current coding unit 1100 or 1150 considering a shape of the current coding unit 1100 or 1150.

According to an embodiment, when partition shape information indicates that a coding unit is partitioned into an odd number of blocks, the video decoding apparatus 150 may determine the odd number of coding units included in the current coding unit 1100 or 1150. For example, when partition shape information indicates that the current coding unit 1100 or 1150 is partitioned into three coding units, the video decoding apparatus 150 may partition the current coding unit 1100 or 1150 into three coding units 1130a, 1130b, and 1130c or 1180a, 1180b, and 1180c. According to an embodiment, the video decoding apparatus 150 may determine the odd number of coding units included in the current coding unit 1100 or 1150, and the sizes of the determined coding units may not be the all same. For example, the size of coding unit 1130b or 1180b from among the determined odd number of coding units 1130a, 1130b, and 1130c or 1180a, 1180b, and 1180c may be different from the sizes of coding units 1130a and 1130c or 1180a and 1180c. That is, coding units that may be determined as the current coding unit 1100 or 1150 is partitioned may have a plurality of types of sizes, and in some cases, the coding units 1130a, 1130b, and 1130c or 1180a, 1180b, and 1180c may have different sizes.

According to an embodiment, when partition shape information indicates that a coding unit is partitioned into an odd number of blocks, the video decoding apparatus 150 may determine the odd number of coding units included in the current coding unit 1100 or 1150, and in addition, may set a certain limit on at least one coding unit from among the odd number of coding units generated via partitioning. Referring to FIG. 11, the video decoding apparatus 150 may differentiate decoding processes performed on the coding unit 1130b or 1180b located at the center from among the three coding units 1130a, 1130b, and 1130c or 1180a, 1180b, and 1180c generated as the current coding unit 1100 or 1150 is partitioned from the other coding units 1130a and 1130c or 1180a and 1180c. For example, the video decoding apparatus 150 may limit the coding unit 1130b or 1180b located at the center to be no longer partitioned unlike the other coding units 1130a and 1130c or 1180a and 1180c, or to be partitioned only a certain number of times.

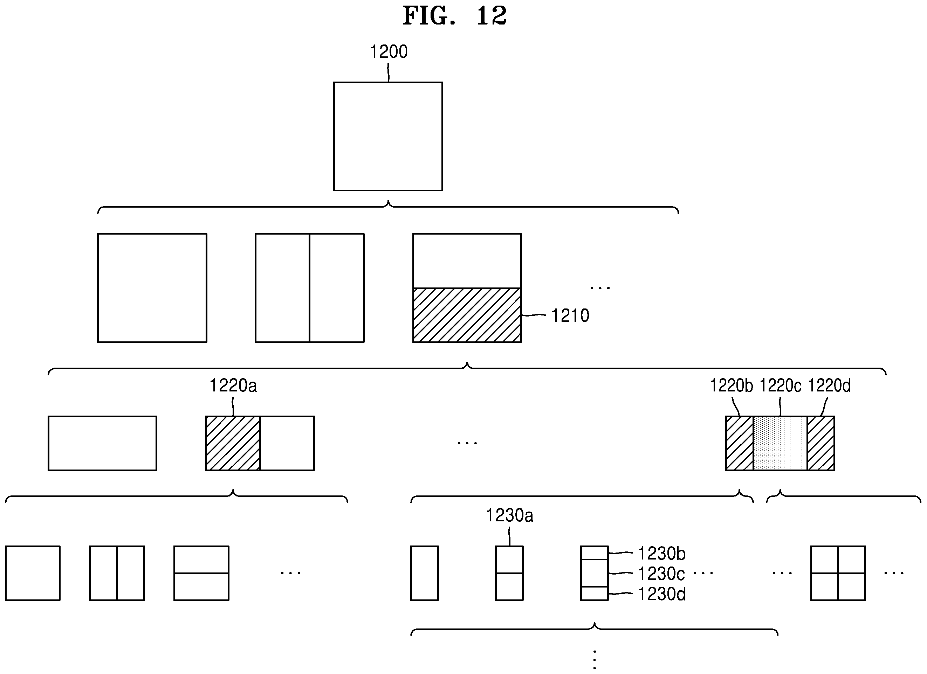

FIG. 12 illustrates processes in which the video decoding apparatus 150 partitions a coding unit, based on at least one of a block shape information and partition shape information, according to an embodiment.

According to an embodiment, the video decoding apparatus 150 may determine a first coding unit 1200 having a square shape to be partitioned or not to be partitioned into coding units, based on at least one of block shape information and partition shape information. According to an embodiment, when the partition shape information indicates that the first coding unit 1200 is partitioned in a horizontal direction, the video decoding apparatus 150 may determine a second coding unit 1210 by partitioning the first coding unit 1200 in the horizontal direction. A first coding unit, a second coding unit, and a third coding unit used according to an embodiment are terms used to indicate a relation between before and after partitioning a coding unit. For example, a second coding unit may be determined by partitioning a first coding unit, and a third coding unit may be determined by partitioning a second coding unit. Hereinafter, it will be understood that relations between first through third coding units are in accordance with the features described above.

According to an embodiment, the video decoding apparatus 150 may determine the determined second coding unit 1210 to be partitioned or not to be partitioned into coding units, based on at least one of block shape information and partition shape information. Referring to FIG. 12, the video decoding apparatus 150 may partition the second coding unit 1210, which has a non-square shape and is determined by partitioning the first coding unit 1200, into at least one third coding unit 1220a, 1220b, 1220c, or 1220d, or may not partition the second coding unit 1210, based on at least one of block shape information and partition shape information. The video decoding apparatus 150 may obtain at least one of the block shape information and the partition shape information, and obtain a plurality of second coding units (for example, the second coding units 1210) having various shapes by partitioning the first coding unit 1200 based on at least one of the obtained block shape information and partition shape information, wherein the second coding unit 1210 may be partitioned according to a method of partitioning the first coding unit 1200 based on at least one of the block shape information and the partition shape information. According to an embodiment, when the first coding unit 1200 is partitioned into the second coding units 1210 based on at least one of block shape information and partition shape information with respect to the first coding unit 1200, the second coding unit 1210 may also be partitioned into third coding units (for example, the third coding units 1220a through 1220d) based on at least one of block shape information and partition shape information with respect to the second coding unit 1210. That is, a coding unit may be recursively partitioned based on at least one of partition shape information and block shape information related to each coding unit. Accordingly, a square coding unit may be determined from a non-square coding unit, and such a square coding unit may be recursively partitioned such that a non-square coding unit is determined. Referring to FIG. 12, a certain coding unit (for example, a coding unit located at the center or a square coding unit) from among the odd number of third coding units 1220b, 1220c, and 1220d determined when the second coding unit 1210 having a non-square shape is partitioned may be recursively partitioned. According to an embodiment, the third coding unit 1220c having a square shape from among the third coding units 1220b through 1220d may be partitioned in a horizontal direction into a plurality of fourth coding units. A fourth coding unit 1240 having a non-square shape from among the plurality of fourth coding units may be partitioned again into a plurality of coding units. For example, the fourth coding unit 1240 having a non-square shape may be partitioned into an odd number of coding units.

A method that may be used to recursively partitioned a coding unit will be described below through various embodiments.

According to an embodiment, the video decoding apparatus 150 may determine each of the third coding units 1220a, 1220b, 1220c, and 1220d to be partitioned into coding units or may determine the second coding unit 1210 not to be partitioned, based on at least one of block shape information and partition shape information. The video decoding apparatus 150 may partition the second coding unit 1210 having a non-square shape into the odd number of third coding units 1220b, 1220c, and 1220d, according to an embodiment. The video decoding apparatus 150 may set a certain limit on a certain third coding unit from among the third coding units 1220b, 1220c, and 1220d. For example, the video decoding apparatus 150 may limit that the third third coding unit 1220c located at the center of the third coding units 1220b, 1220c, and 1220d is no longer partitioned, or is partitioned into a settable number of times. Referring to FIG. 12, the video decoding apparatus 150 may limit that the third coding unit 1220c located at the center of the third coding units 1220b, 1220c, and 1220d included in the second coding unit 1210 having a non-square shape is no longer partitioned, is partitioned into a certain partition shape (for example, partitioned into four coding units or partitioned into shapes corresponding to those into which the second coding unit 1210 is partitioned), or is partitioned only a certain number of times (for example, partitioned only n times wherein n > 0). However, such limits on the third coding unit 1220c located at the center are only examples and should not be interpreted as being limited by those examples, but should be interpreted as including various limits as long as the third coding unit 1220c located at the center are decoded differently from the other third coding units 1220b and 1220d.

According to an embodiment, the video decoding apparatus 150 may obtain at least one of block shape information and partition shape information used to partition a current coding unit from a certain location in the current coding unit.

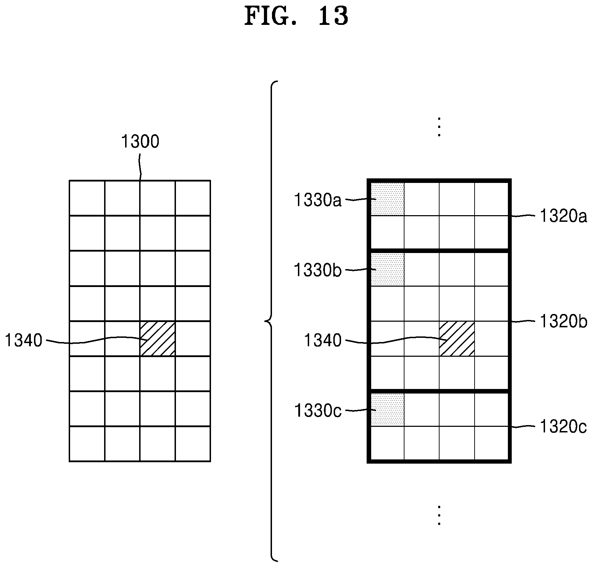

FIG. 13 illustrates a method of determining, by the video decoding apparatus 150, a certain coding unit from among an odd number of coding units, according to an embodiment. Referring to FIG. 13, at least one of block shape information and partition shape information of a current coding unit 1300 may be obtained from a sample at a certain location (for example, a sample 1340 located at the center) from among a plurality of samples included in the current coding unit 1300. However, the certain location in the current coding unit 1300 from which at least one of block shape information and partition shape information is obtained is not limited to the center location shown in FIG. 13, but may be any location (for example, an uppermost location, a lowermost location, a left location, a right location, an upper left location, a lower left location, an upper right location, or a lower right location) included in the current coding unit 1300. The video decoding apparatus 150 may determine that a current coding unit is partitioned into coding units having various shapes and sizes or is not partitioned by obtaining at least one of block shape information and partition shape information from a certain location.

According to an embodiment, the video decoding apparatus 150 may select one coding unit when a current coding unit is partitioned into a certain number of coding units. A method of selecting one of a plurality of coding units may vary, and details thereof will be described below through various embodiments.

According to an embodiment, the video decoding apparatus 150 may partition a current coding unit into a plurality of coding units, and determine a coding unit at a certain location.

FIG. 13 illustrates a method of determining, by the video decoding apparatus 150, a coding unit at a certain location from among an odd number of coding units, according to an embodiment.

According to an embodiment, the video decoding apparatus 150 may use information indicating a location of each of the odd number of coding units so as to determine a coding unit located at the center from among the odd number of coding units. Referring to FIG. 13, the video decoding apparatus 150 may determine the odd number of coding units 1320a, 1320b, and 1320c by partitioning the current coding unit 1300. The video decoding apparatus 150 may determine the center coding unit 1320b by using information about the locations of the odd number of coding units 1320a, 1320b, and 1320c. For example, the video decoding apparatus 150 may determine the coding unit 1320b located at the center by determining the locations of the coding units 1320a, 1320b, and 1320c based on information indicating locations of certain samples included in the coding units 1320a, 1320b, and 1320c. In detail, the video decoding apparatus 150 may determine the coding unit 1320b located at the center by determining the locations of the coding units 1320a, 1320b, and 1320c based on information indicating locations of upper left samples 1330a through 1330c of the coding units 1320a, 1320b, and 1320c.

According to an embodiment, the information indicating the locations of the upper left samples 1330a, 1330b, and 1330c included in the coding units 1320a, 1320b, and 1320c respectively may include information about a location or coordinates of the coding units 1320a, 1320b, and 1320c in a picture. According to an embodiment, the information indicating the locations of the upper left samples 1330a, 1330b, and 1330c included in the coding units 1320a, 1320b, and 1320c respectively may include information indicating widths or heights of the coding units 1320a, 1320b, and 1320c included in the current coding unit 1300, and such widths or heights may correspond to information indicating differences between coordinates of the coding units 1320a, 1320b, and 1320c in a picture. That is, the video decoding apparatus 150 may determine the coding unit 1320b located at the center by directly using the information about the locations or coordinates of the coding units 1320a, 1320b, and 1320c in a picture or by using information about the widths or heights of the coding units 1320a, 1320b, and 1320c corresponding to the differences between coordinates.

According to an embodiment, the information indicating the location of the upper left sample 1330a of the upper coding unit 1320a may indicate (xa, ya) coordinates, the information indicating the location of the upper left sample 1330b of the center coding unit 1320b may indicate (xb, yb) coordinates, and the information indicating the location of the upper left sample 1330c of the lower coding unit 1320c may indicate (xc, yc) coordinates. The video decoding apparatus 150 may determine the center coding unit 1320b by using the coordinates of the upper left samples 1330a, 1330b, and 1330c respectively included in the coding units 1320a, 1320b, and 1320c. For example, when the coordinates of the upper left samples 1330a, 1330b, and 1330c are arranged in an ascending order or descending order, the coding unit 1320b including the coordinates (xb, yb) of the sample 1330b located at the center may be determined as a coding unit located at the center from among the coding units 1320a, 1320b, and 1320c determined when the current coding unit 1300 is partitioned. However, coordinates indicating the locations of the upper left samples 1330a through 1330c may be coordinates indicating absolute locations in a picture, and in addition, (dxb, dyb) coordinates, i.e., information indicating a relative location of the upper left sample 1330b of the center coding unit 1320b, and (dxc, dyc) coordinates, i.e., information indicating a relative location of the upper left sample 1330c of the lower coding unit 1320c, may be used based on the location of the upper left sample 1330a of the upper coding unit 1320a. Also, a method of determining a coding unit at a certain location by using, as information indicating locations of samples included in coding units, coordinates of the samples is not limited to the above, and various arithmetic methods capable of using coordinates of samples may be used.

According to an embodiment, the video decoding apparatus 150 may partition the current coding unit 1300 into the plurality of coding units 1320a, 1320b, and 1320c, and select a coding unit from the coding units 1320a through 1320c according to a certain standard. For example, the video decoding apparatus 150 may select the coding unit 1320b having a different size from among the coding units 1320a, 1320b, and 1320c.

According to an embodiment, the video decoding apparatus 150 may determine widths or heights of the coding units 1320a, 1320b, and 1320c by respectively using the (xa, ya) coordinates, i.e., the information indicating the location of the upper left sample 1330a of the upper coding unit 1320a, the (xb, yb) coordinates, i.e., the information indicating the location of the upper left sample 1330b of the center coding unit 1320b, and the (xc, yc) coordinates, i.e., the information indicating the location of the upper left sample 1330c of the lower coding unit 1320c. The video decoding apparatus 150 may determine the sizes of the coding units 1320a, 1320b, and 1320c by respectively using the coordinates (xa, ya), (xb, yb), and (xc, yc) indicating the locations of the coding units 1320a, 1320b, and 1320c.

According to an embodiment, the video decoding apparatus 150 may determine the width of the upper coding unit 1320a to be xb-xa, and the height to be yb-ya. According to an embodiment, the video decoding apparatus 150 may determine the width of the center coding unit 1320b to be xc-xb, and the height to be yc-yb. According to an embodiment, the video decoding apparatus 150 may determine the width or height of the lower coding unit 1320c by using the width and height of the current coding unit 1300 and the widths and heights of the upper coding unit 1320a and center coding unit 1320b. The video decoding apparatus 150 may determine a coding unit having a different size from other coding units based on the determined widths and heights of the coding units 1320a, 1320b, and 1320c. Referring to FIG. 13, the video decoding apparatus 150 may determine the center coding unit 1320b having a size different from those of the upper coding unit 1320a and lower coding unit 1320c as a coding unit at a certain location. However, processes of the video decoding apparatus 150 determining a coding unit having a different size from other coding units are only an example of determining a coding unit at a certain location by using sizes of coding units determined based on sample coordinates, and thus various processes of determining a coding unit at a certain location by comparing sizes of coding units determined according to certain sample coordinates may be used.

However, a location of a sample considered to determine a location of a coding unit is not limited to the upper left as described above, and information about a location of an arbitrary sample included in a coding unit may be used.

According to an embodiment, the video decoding apparatus 150 may select a coding unit at a certain location from among an odd number of coding units determined when a current coding unit is partitioned, while considering a shape of the current coding unit. For example, when the current coding unit has a non-square shape in which a width is longer than a height, the video decoding apparatus 150 may determine a coding unit at a certain location in a horizontal direction. In other words, the video decoding apparatus 150 may determine one of coding units having a different location in the horizontal direction and set a limit on the one coding unit. When the current coding unit has a non-square shape in which a height is longer than a width, the video decoding apparatus 150 may determine a coding unit at a certain location in a vertical direction. That is, the video decoding apparatus 150 may determine one of coding units having a different location in the vertical direction and set a limit on the one coding unit.

According to an embodiment, the video decoding apparatus 150 may use information indicating a location of each of an even number of coding units so as to determine a coding unit at a certain location from among the even number of coding units. The video decoding apparatus 150 may determine the even number of coding units by partitioning a current coding unit, and determine the coding unit at the certain location by using information about the locations of the even number of coding units. Detailed processes thereof may correspond to those of determining a coding unit at a certain location (for example, a center location) from among an odd number of coding units described in FIG. 13, and thus details thereof are not provided again.

According to an embodiment, when a current coding unit having a non-square shape is partitioned into a plurality of coding units, certain information about a coding unit at a certain location during partitioning processes may be used to determine the coding unit at the certain location from among the plurality of coding units. For example, the video decoding apparatus 150 may use at least one of block shape information and partition shape information stored in a sample included in a center coding unit during partitioning processes so as to determine a coding unit located at the center from among a plurality of coding units obtained by partitioning a current coding unit.

Referring to FIG. 13, the video decoding apparatus 150 may partition the current coding unit 1300 into the plurality of coding units 1320a, 1320b, and 1320c based on at least one of block shape information and partition shape information, and determine the coding unit 1320b located at the center from among the plurality of coding units 1320a, 1320b, and 1320c. In addition, the video decoding apparatus 150 may determine the coding unit 1320b located at the center considering a location from which at least one of the block shape information and the partition shape information is obtained. That is, at least one of the block shape information and the partition shape information of the current coding unit 1300 may be obtained from the sample 1340 located at the center of the current coding unit 1300, and when the current coding unit 1300 is partitioned into the plurality of coding units 1320a, 1320b, and 1320c based on at least one of the block shape information and the partition shape information, the coding unit 1320b including the sample 1340 may be determined as a coding unit located at the center. However, information used to determine a coding unit located at the center is not limited to at least one of the block shape information and the partition shape information, and various types of information may be used while determining a coding unit located at the center.

According to an embodiment, certain information for identifying a coding unit at a certain location may be obtained from a certain sample included in a coding unit to be determined. Referring to FIG. 13, the video decoding apparatus 150 may use at least one of block shape information and partition shape information obtained from a sample at a certain location in the current coding unit 1300 (for example, a sample located at the center of the current coding unit 1300), so as to determine a coding unit at a certain location (for example, a coding unit located at the center from among a plurality of coding units) from among the plurality of coding units 1320a, 1320b, and 1320c determined when the current coding unit 1300 is partitioned. That is, the video decoding apparatus 150 may determine the sample at the certain location considering a block shape of the current coding unit 1300, and determine and set a certain limit on the coding unit 1320b including a sample from which certain information (for example, at least one of block shape information and partition shape information) is obtainable, from among the plurality of coding units 1320a, 1320b, and 1320c determined when the current coding unit 1300 is partitioned. Referring to FIG. 13, according to an embodiment, the video decoding apparatus 150 may determine, as a sample from which certain information is obtainable, the sample 1340 located at the center of the current coding unit 1300, and set a certain limit on the coding unit 1320b including such a sample 1340 during decoding processes. However, a location of a sample from which certain information is obtainable is not limited to the above, and may be a sample at an arbitrary location included in the coding unit 1320b determined to set a limit.

According to an embodiment, a location of a sample from which certain information is obtainable may be determined according to a shape of the current coding unit 1300. According to an embodiment, block shape information may determine whether a shape of a current coding unit is square or non-square, and determine a location of a sample from which certain information is obtainable according to the shape. For example, the video decoding apparatus 150 may determine, as a sample from which certain information is obtainable, a sample located on a boundary of partitioning at least one of a width and a height of a current coding unit into halves by using at least one of information about the width of the current coding unit and information about the height of the current coding unit. As another example, when block shape information related to a current coding unit indicates a non-square shape, the video decoding apparatus 150 may determine, as a sample from which certain information is obtainable, one of samples adjacent to a boundary of partitioning long sides of the current coding unit into halves.

According to an embodiment, when a current coding unit is partitioned into a plurality of coding units, the video decoding apparatus 150 may use at least one of block shape information and partition shape information so as to determine a coding unit at a certain location from among the plurality of coding units. According to an embodiment, the video decoding apparatus 150 may obtain at least one of block shape information and partition shape information from a sample at a certain location included in a coding unit, and may partition a plurality of coding units generated as a current coding unit is partitioned by using at least one of the partition shape information and the block shape information obtained from the sample at the certain location included in each of the plurality of coding units. That is, a coding unit may be recursively partitioned by using at least one of block shape information and partition shape information obtained from a sample at a certain location included in each coding unit. Since processes of recursively partitioning a coding unit have been described above with reference to FIG. 12, details thereof are not provided again.

According to an embodiment, the video decoding apparatus 150 may determine at least one coding unit by partitioning a current coding unit, and determine an order of decoding the at least one coding unit according to a certain block (for example, the current coding unit).

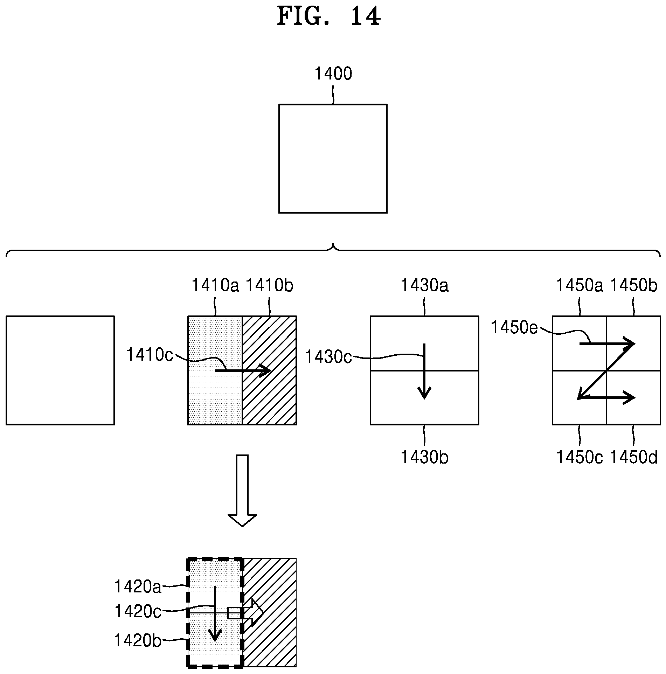

FIG. 14 illustrates an order of processing a plurality of coding units when the plurality of coding units are determined when the video decoding apparatus 150 partitions a current coding unit, according to an embodiment.

According to an embodiment, the video decoding apparatus 150 may determine second coding units 1410a and 1410b by partitioning a first coding unit 1400 in a vertical direction, determine second coding units 1430a and 1430b by partitioning the first coding unit 1400 in a horizontal direction, or determine second coding units 1450a, 1450b, 1450c, and 1450d by partitioning the first coding unit 140 in horizontal and vertical directions, according to block shape information and partition shape information.

Referring to FIG. 14, the video decoding apparatus 150 may determine the second coding units 1410a and 1410b, which are determined by partitioning the first coding unit 1400 in the vertical direction, to be processed in a horizontal direction 1410c. The video decoding apparatus 150 may determine the second coding units 1430a and 1430b, which are determined by partitioning the first coding unit 1400 in the horizontal direction, to be processed in a vertical direction 1430c. The video decoding apparatus 150 may determine the second coding units 1450a, 1450b, 1450c, and 1450d, which are determined by partitioning the first coding unit 1400 in the vertical and horizontal directions, to be processed according to a certain order in which coding units located in one row is processed and then coding units located in a next row is processed (for example, a raster scan order or a z-scan order 1450e).

According to an embodiment, the video decoding apparatus 150 may recursively partition coding units. Referring to FIG. 14, the video decoding apparatus 150 may determine the plurality of second coding units 1410a and 1410b, 1430a and 1430b, or 1450a, 1450b, 1450c, and 1450d by partitioning the first coding unit 1400, and recursively partition each of the plurality of second coding units 1410a and 1410b, 1430a and 1430b, or 1450a, 1450b, 1450c, and 1450d. A method of partitioning the plurality of second coding units 1410a and 1410b, 1430a and 1430b, or 1450a, 1450b, 1450c, and 1450d may correspond to a method of partitioning the first coding unit 1400. Accordingly, each of the plurality of second coding units 1410a and 1410b, 1430a and 1430b, or 1450a, 1450b, 1450c, and 1450d may be independently partitioned into a plurality of coding units. Referring to FIG. 14, the video decoding apparatus 150 may determine the second coding units 1410a and 1410b by partitioning the first coding unit 1400 in the vertical direction, and in addition, determine each of the second coding units 1410a and 1410b to be independently partitioned or not partitioned.

According to an embodiment, the video decoding apparatus 150 may partition the second coding unit 1410a at the left in a horizontal direction into third coding units 1420a and 1420b, and may not partition the second coding unit 1410b at the right.

According to an embodiment, an order of processing coding units may be determined based on partition processes of coding units. In other words, an order of processing coding units that are partitioned may be determined based on an order of processing coding units before being partitioned. The video decoding apparatus 150 may determine an order of processing the third coding units 1420a and 1420b determined when the second coding unit 1410a at the left is partitioned independently from the second coding unit 1410b at the right. Since the third coding units 1420a and 1420b are determined when the second coding unit 1410a at the left is partitioned in a horizontal direction, the third coding units 1420a and 1420b may be processed in a vertical direction 1420c. Also, since an order of processing the second coding unit 1410a at the left and the second coding unit 1410b at the right corresponds to the horizontal direction 1410c, the second coding unit 1410b at the right may be processed after the third coding units 1420a and 1420b included in the second coding unit 1410a at the left are processed in the vertical direction 1420c. The above descriptions are related processes of determining an order of processing coding units according to coding units before being partitioned, but such processes are not limited to the above embodiments, and any method of independently processing, in a certain order, coding units partitioned into various shapes may be used.

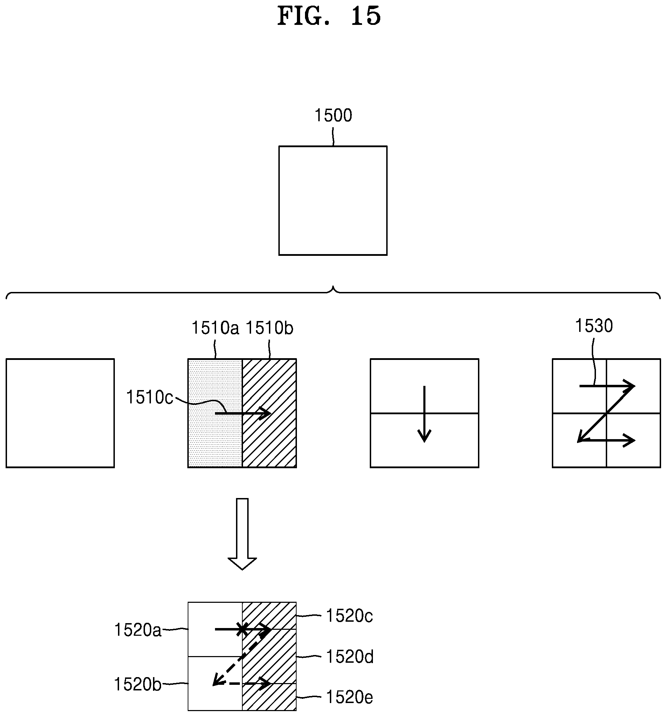

FIG. 15 illustrates processes of determining that a current coding unit is partitioned into an odd number of coding units when coding units are not processable in a certain order by the video decoding apparatus 150, according to an embodiment.

According to an embodiment, the video decoding apparatus 150 may determine that a current coding unit is partitioned into an odd number of coding units based on obtained block shape information and partition shape information. Referring to FIG. 15, a first coding unit 1500 having a square shape may be partitioned into second coding units 1510a and 1510b having a non-square shape, and the second coding units 1510a and 1510b may be independently respectively partitioned into third coding units 1520a and 1520b, and 1520c, 1520d, and 1520e. According to an embodiment, the video decoding apparatus 150 may partition the second coding unit 1510a at the left from among the second coding units 1510a and 1510b into a horizontal direction to determine the plurality of third coding units 1520a and 1520b, and partition the second coding unit 1510b at the right into the odd number of third coding units 1520c, 1520d, and 1520e.

According to an embodiment, the video decoding apparatus 150 may determine whether a coding unit partitioned into an odd number exists by determining whether the third coding units 1520a, 1520b, 1520c, 1520d, and 1520e are processable in a certain order. Referring to FIG. 15, the video decoding apparatus 150 may determine the third coding units 1520a through 1520e by recursively partitioning the first coding unit 1500. The video decoding apparatus 150 may determine whether any of the first coding unit 1500, the second coding units 1510a and 1510b, and the third coding units 1520a and 1520b, and 1520c to 1520e is partitioned into an odd number of coding units, based on at least one of the block shape information and the partition shape information. For example, the second coding unit 1510b at the right from among the second coding units 1510a and 1510b may be partitioned into the odd number of third coding units 1520c through 1520e. An order of processing a plurality of coding units included in the first coding unit 1500 may be a certain order (for example, a z-scan order 1530), and the video decoding apparatus 150 may determine whether the third coding units 1520c, 1520d, and 1520e determined when the second coding unit 1510b at the right is partitioned into an odd number satisfy a condition of being processable according to the certain order.

According to an embodiment, the video decoding apparatus 150 may determine whether the third coding units 1520a, 1520b, 1520c, 1520d, and 1520e included in the first coding unit 1500 satisfy a condition of being processable according to a certain order, wherein the condition is related to whether at least one of a width and a height of each of the second coding units 1510a and 1510b is partitioned into halves according to boundaries of the third coding units 1520a, 1520b, 1520c, 1520d, and 1520e. For example, the third coding units 1520a and 1520b determined when the height of the second coding unit 1510a at the left and having a non-square shape is partitioned into halves satisfy the condition, but it may be determined that the third coding units 1520c, 1520d, and 1520e do not satisfy the condition because the boundaries of the third coding units 1520c, 1520d, and 1520e that are determined when the second coding unit 1510b at the right is partitioned into three coding units do not partition the width or height of the second coding unit 1510b at the right into halves. The video decoding apparatus 150 may determine disconnection of a scan order when the condition is not satisfied, and determine that the second coding unit 1510b at the right is partitioned into the odd number of coding units, based on a result of the determination. According to an embodiment, the video decoding apparatus 150 may set a certain limit on a coding unit at a certain location from among an odd number of coding units obtained by partitioning a coding unit, and since such a limit or certain location has been described above through various embodiments, details thereof are not provided again.

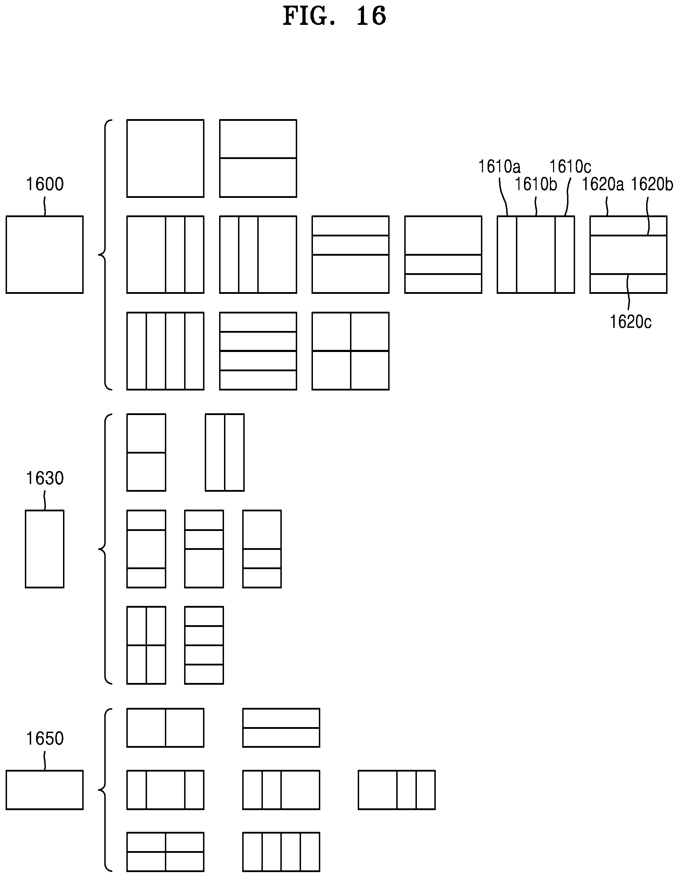

FIG. 16 illustrates processes of determining at least one coding unit when the video decoding apparatus 150 partitions a first coding unit 1600, according to an embodiment. According to an embodiment, the video decoding apparatus 150 may partition the first coding unit 1600 based on at least one of block shape information and partition shape information obtained through an obtainer. The first coding unit 1600 having a square shape may be partitioned into four coding units having a square shape or a plurality of coding units having a non-square shape. For example, referring to FIG. 16, when block shape information indicates that the first coding unit 1600 is a square and partition shape information indicates a partition into non-square coding units, the video decoding apparatus 150 may partition the first coding unit 1600 into a plurality of non-square coding units. In detail, when partition shape information indicates that an odd number of coding units are determined by partitioning the first coding unit 1600 in a horizontal direction or a vertical direction, the video decoding apparatus 150 may determine, as the odd number of coding units, second coding units 1610a, 1610b, and 1610c by partitioning the first coding unit 1600 having a square shape in a vertical direction, or second coding units 1610a, 1610b, and 1610c by partitioning the first coding unit 1600 in a horizontal direction.

According to an embodiment, the video decoding apparatus 150 may determine whether the second coding units 1610a, 1610b, and 1610c, and 1620a, 1620b, and 1620c included in the first coding unit 1600 satisfy a condition of being processable in a certain order, wherein the condition is related to whether at least one of a width and a height of the first coding unit 1600 is partitioned into halves according to boundaries of the second coding units 1610a, 1610b, and 1610c, and 1620a, 1620b, and 1620c. Referring to FIG. 16, since the boundaries of the second coding units 1610a, 1610b, and 1610c determined when the first coding unit 1600 having a square shape is partitioned in a vertical direction do not partition the width of the first coding unit 1600 into halves, it may be determined that the first coding unit 1600 does not satisfy the condition of being processable in a certain order. Also, since the boundaries of the second coding units 1620a, 1620b, and 1620c determined when the first coding unit 1600 having a square shape is partitioned in a horizontal direction do not partition the height of the first coding unit 1600 into halves, it may be determined that the first coding unit 1600 does not satisfy the condition of being processable in a certain order. The video decoding apparatus 150 may determine disconnection of a scan order when the condition is not satisfied, and determine that the first coding unit 1600 is partitioned into the odd number of coding units based on a result of the determination. According to an embodiment, the video decoding apparatus 150 may set a certain limit on a coding unit at a certain location from among an odd number of coding units obtained by partitioning a coding unit, and since such a limit or certain location has been described above through various embodiments, details thereof are not provided again.

According to an embodiment, the video decoding apparatus 150 may determine coding units having various shapes by partitioning a first coding unit.

Referring to FIG. 16, the video decoding apparatus 150 may partition the first coding unit 1600 having a square shape and a first coding unit 1630 or 1650 having a non-square shape into coding units having various shapes.

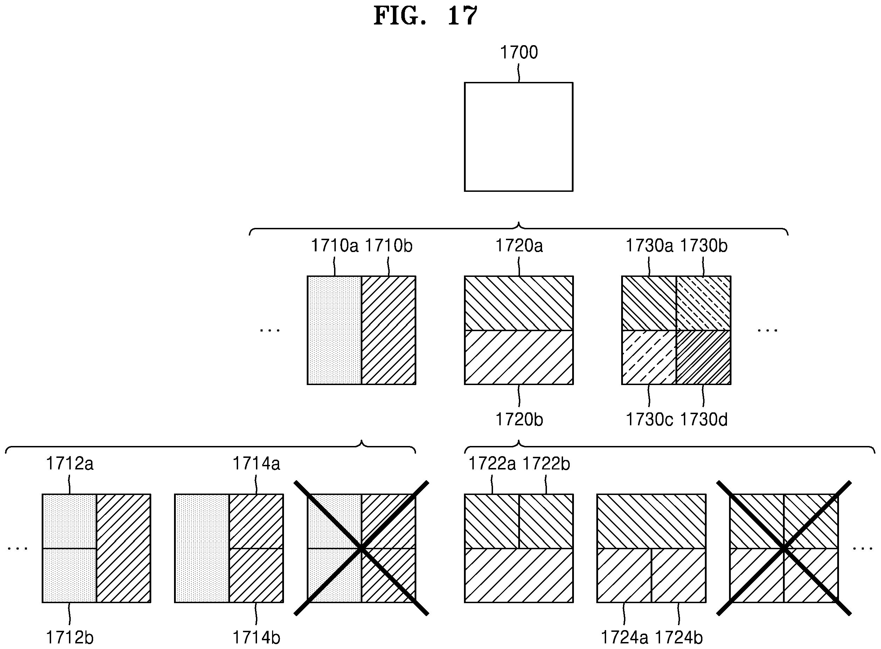

FIG. 17 illustrates that a shape into which a second coding unit is partitionable by the video decoding apparatus 150 is restricted when the second coding unit having a non-square shape determined when a first coding unit 1700 is partitioned satisfies a certain condition, according to an embodiment.

According to an embodiment, the video decoding apparatus 150 may determine that the first coding unit 1700 having a square shape is partitioned into second coding units 1710a and 1710b or 1720a and 1720b having a non-square shape, based on at least one of block shape information and partition shape information obtained through an obtainer. The second coding units 1710a and 1710b or 1720a and 1720b may be independently partitioned. Accordingly, the video decoding apparatus 150 may determine that the second coding units 1710a and 1710b or 1720a and 1720b are partitioned into a plurality of coding units or are not partitioned based on at least one of block shape information and partition shape information related to each of the coding units 1710a and 1710b or 1720a and 1720b. According to an embodiment, the video decoding apparatus 150 may determine third coding units 1712a and 1712b by partitioning, in a horizontal direction, the second coding unit 1710a at the left having a non-square shape, which is determined when the first coding unit 1700 is partitioned in a vertical direction. However, when the second coding unit 1710a at the left is partitioned in the horizontal direction, the video decoding apparatus 150 may set a limit that the second coding unit 1710b at the right is not partitioned in the horizontal direction like the second coding unit 1710a at the left. When third coding units 1714a and 1714b are determined when the second coding unit 1710b at the right is partitioned in the same direction, (i.e., the horizontal direction), the third coding units 1712a, 1712b, 1714a, and 1714b are determined when the second coding units 1710a at the left and the second coding unit 1710b at the right are each independently partitioned in the horizontal direction. However, this is the same result as partitioning the first coding unit 1700 into four second coding units 1730a, 1730b, 1730c, and 1730d having a square shape based on at least one of block shape information and partition shape information, and thus may be inefficient in terms of image decoding.

According to an embodiment, the video decoding apparatus 150 may determine third coding units 1722a and 1722b or 1724a, and 1724b by partitioning, in a vertical direction, the second coding unit 1720a or 1720b having a non-square shape determined when the first coding unit 1700 is partitioned in the horizontal direction. However, when one of second coding units (for example, the second coding unit 1720a at the top) is partitioned in a vertical direction, the video decoding apparatus 150 may set a limit that the other second coding unit (for example, the second coding unit 1720b at the bottom) is not partitioned in the vertical direction like the second coding unit 1720a at the top for the above described reasons.

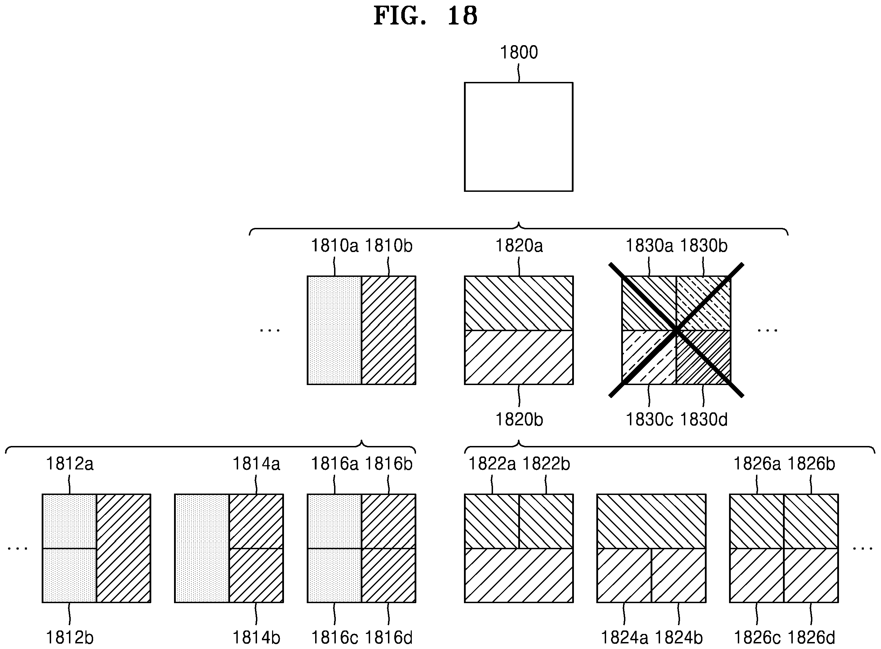

FIG. 18 illustrates processes of the video decoding apparatus 150 partitioning a coding unit having a square shape when partition shape information is unable to indicate that a coding unit is partitioned into four square shapes, according to an embodiment.

According to an embodiment, the video decoding apparatus 150 may determine second coding units 1810a and 1810b, or 1820a and 1820b, by partitioning a first coding unit 1800 based on at least one of block shape information and partition shape information. Partition shape information may include information about various shapes into which a coding unit may be partitioned, but such information about various shapes may not include information for partitioning a coding unit into four square coding units. According to such partition shape information, the video decoding apparatus 150 is unable to partition the first coding unit 1800 having a square shape into four second coding units 1830a, 1830b, 1830c, and 1830d having a square shape. The video decoding apparatus 150 may determine the second coding units 1810a and 1810b, or 1820a and 1820b having a non-square shape based on the partition shape information.

According to an embodiment, the video decoding apparatus 150 may independently partition each of the second coding units 1810a and 1810b, or 1820a and 1820b having a non-square shape. Each of the second coding units 1810a and 1810b, or 1820a and 1820b may be partitioned in a certain order via a recursive method that may be a partitioning method corresponding to a method of partitioning the first coding unit 1800 based on at least one of the block shape information and the partition shape information.

For example, the video decoding apparatus 150 may determine third coding units 1812a and 1812b having a square shape by partitioning the second coding unit 1810a at the left in a horizontal direction, or determine third coding units 1814a and 1814b having a square shape by partitioning the second coding unit 1810b at the right in a horizontal direction. In addition, the video decoding apparatus 150 may determine third coding units 1816a through 1816d having a square shape by partitioning both the second coding unit 1810a at the left and the second coding unit 1810b at the right in the horizontal direction. In this case, coding units may be determined in the same manner as when the first coding unit 1800 is partitioned into four second coding units 1830a through 1830d having a square shape.

As another example, the video decoding apparatus 150 may determine third coding units 1822a and 1822b having a square shape by partitioning the second coding unit 1820a at the top in a vertical direction, and determine third coding units 1824a and 1824b having a square shape by partitioning the second coding unit 1820b at the bottom in a vertical direction. In addition, the video decoding apparatus 150 may determine third coding units 1826a, 1826b, 1826c, and 1826d_having a square shape by partitioning both the second coding unit 1820a at the top and the second coding unit 1820b at the bottom in the vertical direction. In this case, coding units may be determined in the same manner as when the first coding unit 1800 is partitioned into four second coding units 1830a, 1830b, 1830c, and 1830d having a square shape.

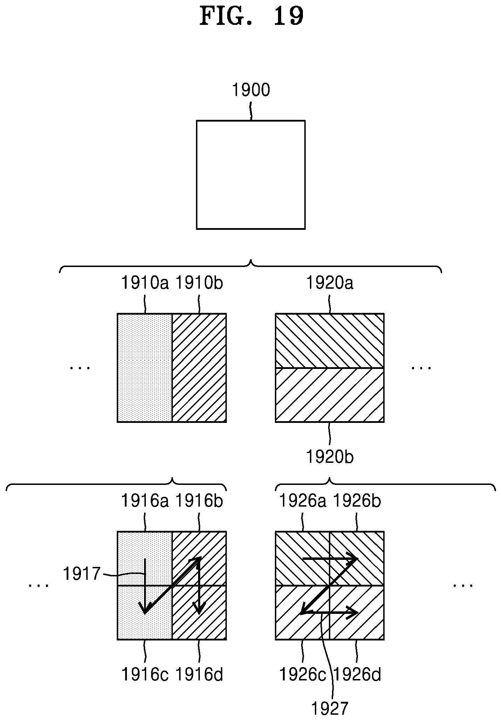

FIG. 19 illustrates that an order of processing a plurality of coding units may be changed according to processes of partitioning a coding unit, according to an embodiment.

According to an embodiment, the video decoding apparatus 150 may partition a first coding unit 1900 based on block shape information and partition shape information. When the block shape information indicates a square shape and the partition shape information indicates that the first coding unit 1900 is partitioned in at least one of a horizontal direction and a vertical direction, the video decoding apparatus 150 may partition the first coding unit 1900 to determine second coding units 1910a and 1910b, 1920a and 1920b. Referring to FIG. 19, the second coding units 1910a and 1910b, or 1920a and 1920b having a non-square shape and determined when the first coding unit 1900 is partitioned in the horizontal direction or the vertical direction may each be independently partitioned based on block shape information and partition shape information. For example, the video decoding apparatus 150 may determine third coding units 1916a, 1916b, 1916c, and 1916d by partitioning, in the horizontal direction, each of the second coding units 1910a and 1910b generated as the first coding unit 1900 is partitioned in the vertical direction, or may determine third coding units 1926a, 1926b, 1926c, and 1926d by partitioning, in the vertical direction, the second coding units 1920a and 1920b generated as the first coding unit 1900 is partitioned in the vertical direction. Processes of partitioning the second coding units 1910a and 1910b, or 1920a and 1920b have been described above with reference to FIG. 17, and thus details thereof are not provided again.

According to an embodiment, the video decoding apparatus 150 may process coding units according to a certain order. Features about processing coding units according to a certain order have been described above with reference to FIG. 14, and thus details thereof are not provided again. Referring to FIG. 19, the video decoding apparatus 150 may determine four third coding units 1916a, 1916b, 1916c, and 1916d or 1926a, 1926b, 1926c, and 1926d having a square shape by partitioning the first coding unit 1900 having a square shape. According to an embodiment, the video decoding apparatus 150 may determine an order of processing the third coding units 1916a, 1916b, 1916c, and 1916d or 1926a, 1926b, 1926c, and 1926d based on how the first coding unit 1900 is partitioned.

According to an embodiment, the video decoding apparatus 150 may determine the third coding units 1916a, 1916b, 1916c, and 1916d by partitioning, in the horizontal direction, the second coding units 1910a and 1910b generated as the first coding unit 1900 is partitioned in the vertical direction, and may process the third coding units 1916a, 1916b, 1916c, and 1916d according to an order 1917 of first processing, in the vertical direction, the third coding units 1916a and 1916c included in the second coding unit 1910a at the left, and then processing, in the vertical direction, the third coding units 1916b and 1916d included in the second coding unit 1910b at the right.

According to an embodiment, the video decoding apparatus 150 may determine the third coding units 1926a through 1926d by partitioning, in the vertical direction, the second coding units 1920a and 1920b generated as the first coding unit 1900 is partitioned in the horizontal direction, and process the third coding units 1926a through 1926d according to an order 1927 of first processing, in the horizontal direction, the third coding units 1926a and 1926b included in the second coding unit 1920a at the top, and then processing, in the horizontal direction, the third coding units 1926c and 1926d included in the second coding unit 1920b at the bottom.

Referring to FIG. 19, the third coding units 1916a through 1916d or 1926a through 1926d having a square shape may be determined when the second coding units 1910a and 1910b, or 1920a and 1920b are each partitioned. The second coding units 1910a and 1910b determined when the first coding unit 1900 is partitioned in the vertical direction and the second coding units 1920a and 1920b determined when the first coding unit 1900 is partitioned in the horizontal direction are partitioned in different shapes, but according to the third coding units 1916a through 1916d and 1926a through 1926d determined afterwards, the first coding unit 1900 is partitioned in coding units having same shapes. Accordingly, the video decoding apparatus 150 may process pluralities of coding units determined in same shapes in different orders even when the coding units having the same shapes are consequently determined when coding units are recursively partitioned through different processes based on at least one of block shape information and partition shape information.

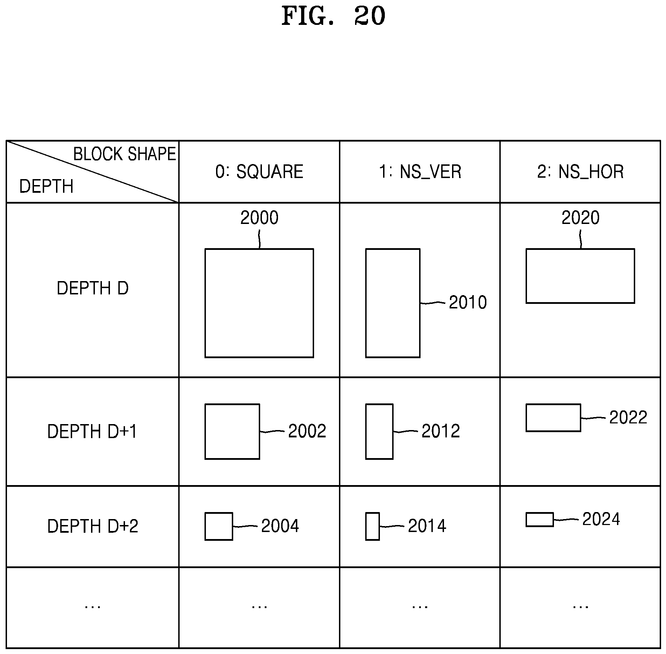

FIG. 20 illustrates processes of determining a depth of a coding unit as a shape and size of the coding unit are changed, when a plurality of coding units are determined as the coding unit is recursively partitioned, according to an embodiment.

According to an embodiment, the video decoding apparatus 150 may determine a depth of a coding unit according to a certain standard. For example, the certain standard may be a length of a long side of the coding unit. When a length of a long side of a current coding unit is partitioned by 2n times shorter than a length of a long side of a coding unit before partition, it may be determined that a depth of the current coding unit is increased by n times than a depth of the coding unit before partition, wherein n>0. Hereinafter, a coding unit having an increased depth is referred to as a coding unit of a lower depth.

Referring to FIG. 20, the video decoding apparatus 150 may determine a second coding unit 2002 and a third coding unit 2004 of lower depths by partitioning a first coding unit 2000 having a square shape, based on block shape information indicating a square shape (for example, block shape information may indicate '0:SQUARE'), according to an embodiment. When a size of the first coding unit 2000 having a square shape is 2Nx2N, the second coding unit 2002 determined by partitioning a width and a height of the first coding unit 2000 by 1/21 may have a size of NxN. In addition, the third coding unit 2004 determined by partitioning a width and a height of the second coding unit 2002 by 1/2 may have a size of N/2xN/2. In this case, a width and a height of the third coding unit 2004 corresponds to 1/22 of the first coding unit 2000. When a depth of the first coding unit 2000 is D, a depth of the second coding unit 2002 having 1/21 of the width and the height of the first coding unit 2000 may be D+1, and a depth of the third coding unit 2004 having 1/22 of the width and the height of the first coding unit 2000 may be D+2.

According to an embodiment, the video decoding apparatus 150 may determine a second coding unit 2012 or 2022 and a third coding unit 2014 or 2024 by partitioning a first coding unit 2010 or 2020 having a non-square shape, based on block shape information indicating a non-square shape (for example, block shape information may indicate '1:NS_VER' indicating a non-square shape in which a height is longer than a width, or '2:NS_HOR' indicating a non-square shape in which a width is longer than a height), according to an embodiment.

The video decoding apparatus 150 may determine a second coding unit (for example, the second coding unit 2002, 2012, or 2022) by partitioning at least one of a width and a height of the first coding unit 2010 having a size of Nx2N. That is, the video decoding apparatus 150 may determine the second coding unit 2002 having a size of NxN or the second coding unit 2022 having a size of NxN/2 by partitioning the first coding unit 2010 in a horizontal direction, or determine the second coding unit 2012 having a size of N/2xN by partitioning the first coding unit 2010 in horizontal and vertical directions.

According to an embodiment, the video decoding apparatus 150 may determine a second coding unit (for example, the second coding unit 2002, 2012, or 2022) by partitioning at least one of a width and a height of the first coding unit 2020 having a size of 2NxN. That is, the video decoding apparatus 150 may determine the second coding unit 2002 having a size of NxN or the second coding unit 2012 having a size of N/2xN by partitioning the first coding unit 200 in a vertical direction, or determine the second coding unit 2022 having a size of NxN/2 by partitioning the first coding unit 2010 in horizontal and vertical directions.

According to an embodiment, the video decoding apparatus 150 may determine a third coding unit (for example, the third coding unit 2004, 2014, or 2024) by partitioning at least one of a width and a height of the second coding unit 2002 having a size of NxN. That is, the video decoding apparatus 150 may determine the third coding unit 2004 having a size of N/2xN/2, the third coding unit 2014 having a size of N/22xN/2, or the third coding unit 2024 having a size of N/2xN/22 by partitioning the second coding unit 2002 in vertical and horizontal directions.

According to an embodiment, the video decoding apparatus 150 may determine a third coding unit (for example, the third coding unit 2004, 2014, or 2024) by partitioning at least one of a width and a height of the second coding unit 2012 having a size of N/2xN. That is, the video decoding apparatus 150 may determine the third coding unit 2004 having a size of N/2xN/2 or the third coding unit 2024 having a size of N/2xN/22 by partitioning the second coding unit 2012 in a horizontal direction, or the third coding unit 2014 having a size of N/22xN/2 by partitioning the second coding unit 2012 in vertical and horizontal directions.

According to an embodiment, the video decoding apparatus 150 may determine a third coding unit (for example, the third coding unit 2004, 2014, or 2024) by partitioning at least one of a width and a height of the second coding unit 2022 having a size of NxN/2. That is, the video decoding apparatus 150 may determine the third coding unit 2004 having a size of N/2xN/2 or the third coding unit 2014 having a size of N/22xN/2 by partitioning the second coding unit 2022 in a vertical direction, or the third coding unit 2024 having a size of N/2xN/22 by partitioning the second coding unit 2022 in vertical and horizontal directions.

According to an embodiment, the video decoding apparatus 150 may partition a coding unit (for example, the first, second, or third coding unit 2000, 2002, or 2004) having a square shape in a horizontal or vertical direction. For example, the first coding unit 2010 having a size of Nx2N may be determined by partitioning the first coding unit 2000 having a size of 2Nx2N in the vertical direction, or the first coding unit 2020 having a size of 2NxN may be determined by partitioning the first coding unit 2000 in the horizontal direction. According to an embodiment, when a depth is determined based on a length of a longest side of a coding unit, a depth of a coding unit determined as the first coding unit 2000 having a size of 2Nx2N is partitioned in a horizontal or vertical direction may be the same as a depth of the first coding unit 2000.

According to an embodiment, the width and the height of the third coding unit 2014 or 2024 may be 1/22 of those of the first coding unit 2010 or 2020. When the depth of the first coding unit 2010 or 2020 is D, the depth of the second coding unit 2012 or 2022 that is 1/2 of the width and the height of the first coding unit 2010 or 2020 may be D+1, and the depth of the third coding unit 2014 or 2024 that is 1/22 of the width and the height of the first coding unit 2010 or 2020 may be D+2.

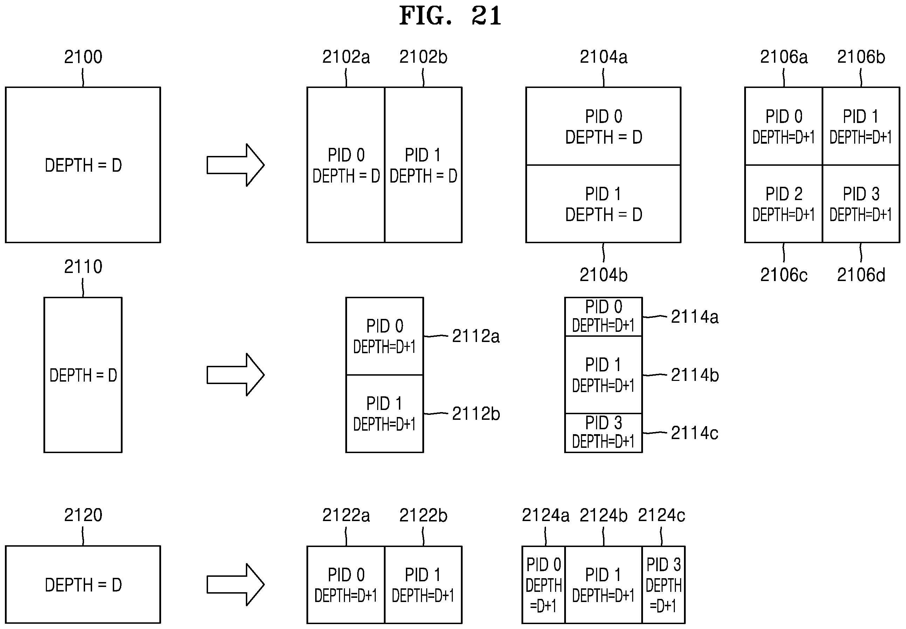

FIG. 21 illustrates a part index (PID) for distinguishing depths and coding units, which may be determined according to shapes and sizes of coding units, according to an embodiment.

According to an embodiment, the video decoding apparatus 150 may determine a second coding unit having various shapes by partitioning a first coding unit 2100 having a square shape. Referring to FIG. 21, the video decoding apparatus 150 may determine second coding units 2102a and 2102b, 2104a and 2104b, or 2106a, 2106b, 2106c, and 2106d by partitioning the first coding unit 2100 in at least one of a vertical direction and a horizontal direction, according to partition shape information. That is, the video decoding apparatus 150 may determine the second coding units 2102a and 2102b, 2104a and 2104b, or 2106a, 2106b, 2106c, and 2106d, based on partition shape information of the first coding unit 2100.

According to an embodiment, a depth of the second coding units 2102a and 2102b, 2104a and 2104b, or 2106a, 2106b, 2106c, and 2106d determined according to the partition shape information of the first coding unit 2100 having a square shape may be determined based on a length of a long side. For example, because a length of one side of the first coding unit 2100 having a square shape is the same as a length of a long side of the second coding units 2102a and 2102b or 2104a and 2104b having a non-square shape, the depths of the first coding unit 2100 and the second coding units 2102a and 2102b or 2104a and 2104b having a non-square shape may be the same, i.e., D. On the other hand, when the video decoding apparatus 150 partitions the first coding unit 2100 into the four second coding units 2106a, 2106b, 2106c, and 2106d having a square shape, based on the partition shape information, a length of one side of the second coding units 2106a, 2106b, 2106c, and 2106d having a square shape is 1/2 of the length of one side of the first coding unit 2100, the depths of the second coding units 2106a, 2106b, 2106c, and 2106d may be D+1, i.e., a depth lower than the depth D of the first coding unit 2100.

According to an embodiment, the video decoding apparatus 150 may partition a first coding unit 2110, in which a height is longer than a width, in a horizontal direction into a plurality of second coding units 2112a and 2112b or 2114a, 2114b, and 2114c, according to partition shape information. According to an embodiment, the video decoding apparatus 150 may partition a first coding unit 2120, in which a width is longer than a height, in a vertical direction into a plurality of second coding units 2122a and 2122b or 2114a, 2114b, and 2114c, according to partition shape information.

According to an embodiment, depths of the second coding units 2112a and 2112b, 2114a, 2114b, and 2114c, 2122a and 2122b, or 2124a, 2124b, and 2124c determined according to the partition shape information of the first coding unit 2110 or 2120 having a non-square shape may be determined based on a length of a long side. For example, because a length of one side of the second coding units 2112a and 2112b having a square shape is 1/2 of a length of a long side of the first coding unit 2110 having a non-square shape, in which the height is longer than the width, the depths of the second coding units 2112a and 2112b are D+1, i.e., depths lower than the depth D of the first coding unit 2110 having a non-square shape.

In addition, the video decoding apparatus 150 may partition the first coding unit 2110 having a non-square shape into an odd number of second coding units or 2114a, 2114b, and 2114c, based on partition shape information. The odd number of second coding units or 2114a, 2114b, and 2114c may include the second coding units 2114a and 2114c having a non-square shape, and the second coding unit 2114b having a square shape. In this case, because a length of a long side of the second coding units 2114a and 2114c having a non-square shape and a length of one side of the second coding unit 2114b having a square shape are 1/2 of a length of one side of the first coding unit 2110, depths of the second coding units or 2114a, 2114b, and 2114c may be D+1, i.e., a depth lower than the depth D of the first coding unit 2110. The video decoding apparatus 150 may determine depths of coding units related to the first coding unit 2110 having a non-square shape in which a width is longer than a height, in the same manner as determining depths of coding units related to the first coding unit 2110.

According to an embodiment, with respect to determining PIDs for distinguishing coding units, when an odd number of coding units do not have the same size, the video decoding apparatus 150 may determine PIDs based on a size ratio of the coding units. Referring to FIG. 21, the second coding unit_2114b located at the center from the odd number of second coding units 2114a, 2114b, and 2114c may have the same width as the second coding units 2114a and 2114c, but have a height twice higher than those of the second coding units 2114a and 2114c. That is, the second coding unit 2114b located at the center may include two of the second coding units 2114a and 2114c. Accordingly, when the PID of the second coding unit 2114b located at the center is 1 according to a scan order, the PID of the second coding unit 2114c in a next order may be 3, the PID being increased by 2. That is, values of the PID may be discontinuous. According to an embodiment, the video decoding apparatus 150 may determine whether an odd number of coding units has the same sizes based on discontinuity of PID for distinguishing the coding units.

According to an embodiment, the video decoding apparatus 150 may determine whether a plurality of coding units determined as a current coding unit is partitioned have certain partition shapes based on values of PID. Referring to FIG. 21, the video decoding apparatus 150 may determine the even number of second coding units 2112a and 211b or the odd number of second coding units 2114a, 2114b, and 2114c by partitioning the first coding unit 2110 having a rectangular shape in which the height is longer than the width. The video decoding apparatus 150 may use the PID indicating each coding unit so as to distinguish a plurality of coding units. According to an embodiment, a PID may be obtained from a sample at a certain location (for example, an upper left sample) of each coding unit.

According to an embodiment, the video decoding apparatus 150 may determine a coding unit at a certain location from among coding units determined by using PIDs for distinguishing coding units. According to an embodiment, when partition shape information of the first coding unit 2110 having a rectangular shape in which a height is longer than a width indicates that the first coding unit 2110 is partitioned into three coding units, the video decoding apparatus 150 may partition the first coding unit 2110 into the three second coding units 2114a, 2114b, and 2114c. The video decoding apparatus 150 may assign a PID to each of the three second coding units 2114a, 2114b, and 2114c. The video decoding apparatus 150 may compare PIDs of an odd number of coding units so as to determine a center coding unit from among the coding units. The video decoding apparatus 150 may determine, as a coding unit at a center location from among coding units determined as the first coding unit 2110 is partitioned, the second coding unit 2114b having a PID corresponding to a center value from among PIDs, based on PIDs of the coding units. According to an embodiment, while determining PIDs for distinguishing coding units, when the coding units do not have the same sizes, the video decoding apparatus 150 may determine PIDs based on a size ratio of the coding units. Referring to FIG. 21, the second coding unit 2114b generated as the first coding unit 2110 is partitioned may have the same width as the second coding units 2114a and 2114c, but may have the height twice higher than those of the second coding units 2114a and 2114c. In this case, when the PID of the second coding unit 2114b located at the center is 1, the PID of the second coding unit 2114c in a next order may be 3, the PID increased by 2. In this manner, when an increasing range of PIDs differs while uniformly increasing, the video decoding apparatus 150 may determine that a current coding unit is partitioned into a plurality of coding units including a coding unit having a different size from other coding units. According to an embodiment, when partition shape information indicates partition into an odd number of coding units, the video decoding apparatus 150 may partition a current coding unit into a plurality of coding units, in which a coding unit at a certain location (for example, a center coding unit) have a size different from other coding units. In this case, the video decoding apparatus 150 may determine the center coding unit having the different size by using PIDs of the coding units. However, a PID, and a size or location of a coding unit at a certain location described above are specified to describe an embodiment, and thus should not be limitedly interpreted, and various PIDs, and various locations and sizes of a coding unit may be used.

According to an embodiment, the video decoding apparatus 150 may use a certain data unit from which recursive partition of a coding unit is started.

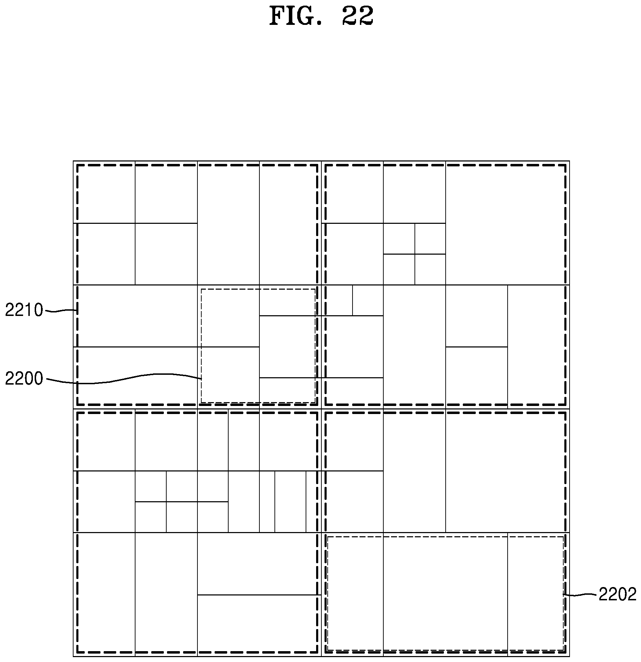

FIG. 22 illustrates that a plurality of coding units are determined according to a plurality of certain data units included in a picture, according to an embodiment.

According to an embodiment, a certain data unit may be defined as a data unit from which a coding unit starts to be recursively partitioned by using at least one of block shape information and partition shape information. That is, the certain data unit may correspond to a coding unit of an uppermost depth used while determining a plurality of coding units by partitioning a current picture. Hereinafter, the certain data unit is referred to as a reference data unit for convenience of description.

According to an embodiment, the reference data unit may indicate a certain size and shape. According to an embodiment, a reference coding unit may include MxN samples. Here, M and N may be the same, and may be an integer expressed as a multiple of 2. That is, the reference data unit may indicate a square shape or a non-square shape, and may later be partitioned into an integer number of coding units.

According to an embodiment, the video decoding apparatus 150 may partition a current picture into a plurality of reference data units. According to an embodiment, the video decoding apparatus 150 may partition the plurality of reference data units obtained by partitioning the current picture by using partitioning information about each of the reference data units. Partitioning processes of such reference data units may correspond to partitioning processes using a quad-tree structure.

According to an embodiment, the video decoding apparatus 150 may pre-determine a smallest size available for the reference data unit included in the current picture. Accordingly, the video decoding apparatus 150 may determine the reference data unit having various sizes that are equal to or larger than the smallest size, and determine at least one coding unit based on the determined reference data unit by using block shape information and partition shape information.

Referring to FIG. 22, the video decoding apparatus 150 may use a reference coding unit 2200 having a square shape, or may use a reference coding unit 2202 having a non-square shape. According to an embodiment, a shape and size of a reference coding unit may be determined according to various data units (for example, a sequence, a picture, a slice, a slice segment, and a largest coding unit) that may include at least one reference coding unit.

According to an embodiment, the obtainer of the video decoding apparatus 150 may obtain, from a bitstream, at least one of information about a shape of a reference coding unit and information about a size of the reference coding unit, according to the various data units. Processes of determining at least one coding unit included in the reference coding unit 2200 having a square shape have been described above through processes of partitioning the current coding unit 1000 of FIG. 10, and processes of determining at least one coding unit included in the reference coding unit 2202 having a non-square shape have been described above through processes of partitioning the current coding unit 1100 or 1150 of FIG. 11, and thus details thereof are not provided again.

According to an embodiment, in order to determine a size and shape of a reference coding unit according to some data units pre-determined based on a predetermined condition, the video decoding apparatus 150 may use a PID for distinguishing the size and shape of the reference coding unit. That is, the obtainer may obtain, from a bitstream, only a PID for distinguishing a size and shape of a reference coding unit as a data unit satisfying a predetermined condition (for example, a data unit having a size equal to or smaller than a slice) from among various data units (for example, a sequence, a picture, a slice, a slice segment, and a largest coding unit), according to slices, slice segments, and largest coding units. The video decoding apparatus 150 may determine the size and shape of the reference data unit according to data units that satisfy the predetermined condition, by using the PID. When information about a shape of a reference coding unit and information about a size of a reference coding unit are obtained from a bitstream and used according to data units having relatively small sizes, usage efficiency of the bitstream may not be sufficient, and thus instead of directly obtaining the information about the shape of the reference coding unit and the information about the size of the reference coding unit, only a PID may be obtained and used. In this case, at least one of the size and the shape of the reference coding unit corresponding to the PID indicating the size and shape of the reference coding unit may be pre-determined. That is, the video decoding apparatus 150 may select at least one of the pre-determined size and shape of the reference coding unit according to the PID so as to determine at least one of the size and shape of the reference coding unit included in a data unit that is a criterion for obtaining the PID.

According to an embodiment, the video decoding apparatus 150 may use at least one reference coding unit included in one largest coding unit. That is, a largest coding unit partitioning an image may include at least one reference coding unit, and a coding unit may be determined when each of the reference coding unit is recursively partitioned. According to an embodiment, at least one of a width and height of the largest coding unit may be an integer times at least one of a width and height of the reference coding unit. According to an embodiment, a size of a reference coding unit may be equal to a size of a largest coding unit, which is partitioned n times according to a quad-tree structure. In other words, the video decoding apparatus 150 may determine a reference coding unit by partitioning a largest coding unit n times according to a quad-tree structure, and partition the reference coding unit based on at least one of block shape information and partition shape information according to various embodiments.

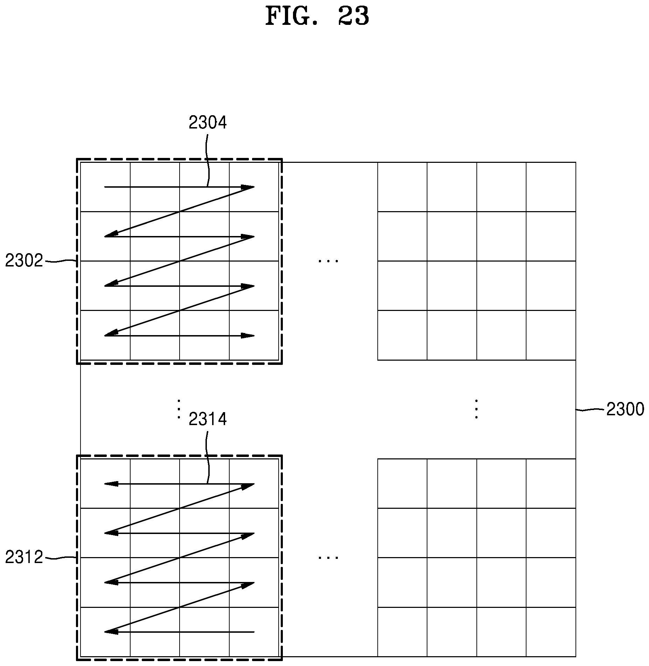

FIG. 23 illustrates a processing block serving as a criterion of determining a determination order of reference coding units included in a picture 2300, according to an embodiment.

According to an embodiment, the video decoding apparatus 150 may determine at least one processing block partitioning a picture. A processing block is a data unit including at least one reference coding unit partitioning an image, and the at least one reference coding unit included in the processing block may be determined in a certain order. In other word, a determining order of the at least one reference coding unit determined in each processing block may correspond to one of various orders for determining a reference coding unit, and may vary according to processing blocks. A determining order of reference coding units determined per processing block may be one of various orders, such as a raster scan order, a Z-scan order, an N-scan order, an up-right diagonal scan order, a horizontal scan order, and a vertical scan order, but should not be limitedly interpreted by the scan orders.

According to an embodiment, the video decoding apparatus 150 may determine a size of at least one processing block included in an image by obtaining information about a size of a processing block. The video decoding apparatus 150 may obtain, from a bitstream, the information about a size of a processing block to determine the size of the at least one processing block included in the image. The size of the processing block may be a certain size of a data unit indicated by the information about a size of a processing block.

According to an embodiment, the obtainer of the video decoding apparatus 150 may obtain, from the bitstream, the information about a size of a processing block according to certain data units. For example, the information about a size of a processing block may be obtained from the bitstream in data units of images, sequences, pictures, slices, and slice segments. That is, the obtainer may obtain, from the bitstream, the information about a size of a processing block according to such several data units, and the video decoding apparatus 150 may determine the size of at least one processing block partitioning the picture by using the obtained information about a size of a processing block, wherein the size of the processing block may be an integer times a size of a reference coding unit.

According to an embodiment, the video decoding apparatus 150 may determine sizes of processing blocks 2302 and 2312 included in the picture 2300. For example, the video decoding apparatus 150 may determine a size of a processing block based on information about a size of a processing block, the information obtained from a bitstream. Referring to FIG. 23, the video decoding apparatus 150 may determine horizontal sizes of the processing blocks 2302 and 2312 to be four times a horizontal size of a reference coding unit, and a vertical size thereof to be four times a vertical size of the reference coding unit, according to an embodiment. The video decoding apparatus 150 may determine a determining order of at least one reference coding unit in at least one processing block.

According to an embodiment, the video decoding apparatus 150 may determine each of the processing blocks 2302 and 2312 included in the picture 2300 based on a size of a processing block, and determine a determining order of at least one reference coding unit included in each of the processing blocks 2302 and 2312. According to an embodiment, determining of a reference coding unit may include determining of a size of the reference coding unit.

According to an embodiment, the video decoding apparatus 150 may obtain, from a bitstream, information about a determining order of at least one reference coding unit included in at least one processing block, and determine the determining order of the at least one reference coding unit based on the obtained information. The information about a determining order may be defined as an order or direction of determining reference coding units in a processing block. That is, an order of determining reference coding units may be independently determined per processing block.

According to an embodiment, the video decoding apparatus 150 may obtain, from a bitstream, information about a determining order of a reference coding unit according to certain data units. For example, the obtainer may obtain, from the bitstream, the information about a determining order of a reference coding unit according to data units, such as images, sequences, pictures, slices, slice segments, and processing blocks. Since the information about a determining order of a reference coding unit indicates a determining order of a reference coding unit in a processing block, the information about a determining order may be obtained per certain data unit including an integer number of processing blocks.

According to an embodiment, the video decoding apparatus 150 may determine at least one reference coding unit based on the determined order.

According to an embodiment, the obtainer may obtain, from the bitstream, information about a determining order of a reference coding unit, as information related to the processing blocks 2302 and 2312, and the video decoding apparatus 150 may determine an order of determining at least one reference coding unit included in the processing blocks 2302 and 2312 and determine at least one reference coding unit included in the picture 2300 according to a determining order of a coding unit. Referring to FIG. 23, the video decoding apparatus 150 may determine determining orders 2304 and 2314 of at least one reference coding unit respectively related to the processing blocks 2302 and 2312. For example, when information about a determining order of a reference coding unit is obtained per processing block, determining orders of a reference coding unit related to the processing blocks 2302 and 2312 may be different from each other. When the determining order 2304 related to the processing block 2302 is a raster scan order, reference coding units included in the processing block 2302 may be determined according to the raster scan order. On the other hand, when the determining order 2314 related to the processing block 2312 is an inverse order of a raster scan order, reference coding units included in the processing block 2312 may be determined in the inverse order of the raster scan order.

The video decoding apparatus 150 may decode determined at least one reference coding unit, according to an embodiment. The video decoding apparatus 150 may decode an image based on reference coding units determined through above embodiments. Examples of a method of decoding a reference coding unit may include various methods of decoding an image.

According to an embodiment, the video decoding apparatus 150 may obtain, from a bitstream, and use block shape information indicating a shape of a current coding unit or partition shape information indicating a method of partitioning the current coding unit. The block shape information or the partition shape information may be included in a bitstream related to various data units. For example, the video decoding apparatus 150 may use the block shape information or partition shape information, which is included in a sequence parameter set, a picture parameter set, a video parameter set, a slice header, and a slice segment header. In addition, the video decoding apparatus 150 may obtain, from a bitstream, and use syntax corresponding to the block shape information or the partition shape information, according to largest coding units, reference coding units, and processing blocks.

While this disclosure has been particularly shown and described with reference to embodiments thereof, it will be understood by those of ordinary skill in the art that various changes in form and details may be made therein without departing from the spirit and scope of the disclosure as defined by the appended claims. The embodiments should be considered in a descriptive sense only and not for purposes of limitation. Therefore, the scope of the disclosure is defined not by the detailed description of the disclosure but by the appended claims, and all differences within the scope will be construed as being included in the present disclosure.

The embodiments of the present disclosure can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

## Claims

1. A video encoding method comprising:
generating a first predicted block by performing intra prediction on a current block by using neighboring pixels of the current block which have been previously encoded and reconstructed;
determining a reference block corresponding to the current block and included in a reconstructed pixel region encoded and reconstructed prior to the current block;
generating a residual block, based on the reference block;
generating a second predicted block by adding residual values of pixels included in the residual block and intra prediction values of pixels included in the first predicted block;
determining the first predicted block or the second predicted block to be a predicted block of the current block; and
generating a bitstream including residual data of the current block generated from the determined predicted block.

2. The video encoding method of claim 1, wherein the determining of the reference block corresponding to the current block and included in the reconstructed pixel region comprises:
determining a template of the current block;
determining pixels matching the template and included in the reconstructed pixel region; and
determining the reference block, based on the pixels matching the template.

3. The video encoding method of claim 1, wherein the determining of the reference block corresponding to the current block and included in the reconstructed pixel region comprises:
determining a position of the reference block in the reconstructed pixel region; and
determining a motion vector of the current block, based on a position of the current block and the position of the reference block.

4. The video encoding method of claim 1, wherein the determining of the reference block corresponding to the current block and included in the reconstructed pixel region comprises:
determining a range of search for the reference block in the reconstructed pixel region; and
determining the reference block by searching the determined range of search for the reference block.

5. The video encoding method of claim 1, wherein the generating of the residual block based on the reference block reference block comprises:
generating a third predicted block of the reference block by applying the same intra prediction mode as the current block to the reference block by using neighboring pixels of the reference block; and
generating the residual block from a difference between values of the reference block and the third predicted block.

6. The video encoding method of claim 1, further comprising filtering the reconstructed pixel region.

7. The video encoding method of claim 6, wherein the filtering of the reconstructed pixel region comprises filtering the reconstructed pixel region by using one of a Gaussian filter, a median filter, and a bilateral filter.

8. The video encoding method of claim 6, wherein the filtering of the reconstructed pixel region comprises:
determining a direction of the filtering, based on an intra prediction mode used for the current block; and
filtering the reconstructed pixel region, based on the determined direction.

9. The video encoding method of claim 1, wherein the determining of the reference block corresponding to the current block and included in the reconstructed pixel region comprises:
determining a plurality of candidate blocks in the reconstructed pixel region; and
determining the reference block by performing weighted averaging on the plurality of candidate blocks.

10. The video encoding method of claim 1, wherein the determining of the first predicted block or the second predicted block to be the predicted block of the current block comprises:
calculating rate-distortion costs of each of the first predicted block and the second predicted block; and
selecting the first predicted block or the second predicted block, based on the calculated rate-distortion costs.

11. A video encoding apparatus comprising:
an intra predictor configured to generate a first predicted block by performing intra prediction on a current block by using neighboring pixels of the current block which have been previously encoded and reconstructed;
a residual predictor configured to determine a reference block corresponding to the current block and included in a reconstructed pixel region encoded and reconstructed prior to the current block, generate a residual block, based on the reference block, and generate a second predicted block by adding residual values of pixels included in the residual block and intra prediction values of pixels included in the first predicted block; and
a bitstream generator configured to determine the first predicted block or the second predicted block to be a predicted block of the current block and generate a bitstream including residual data of the current block generated from the determined predicted block.

12. The video encoding apparatus of claim 11, wherein the residual predictor is further configured to generate a third predicted block of the reference block by applying the same intra prediction mode as the current block to the reference block by using neighboring pixels of the reference block and generate the residual block from a difference between values of the reference block and the third predicted block.

13. A video decoding method comprising:
generating a first predicted block by performing intra prediction on a current block by using neighboring pixels of the current block which have been previously encoded and reconstructed;
determining a reference block corresponding to the current block and included in a reconstructed pixel region encoded and reconstructed prior to the current block;
generating a residual block, based on the reference block;
generating a second predicted block by adding residual values of pixels included in the residual block and intra prediction values of pixels included in the first predicted block;
determining the first predicted block or the second predicted block to be a predicted block of the current block; and
reconstructing the current block by using residual data of the current block obtained from a bitstream and the determined predicted block.

14. The video decoding method of claim 13, wherein the generating of the residual block based on the reference block comprises:
generating a third predicted block of the reference block by applying the same intra prediction mode as the current block to the reference block by using neighboring pixels of the reference block; and
generating the residual block from a difference between values of the reference block and the third predicted block.

15. The video decoding method of claim 13, wherein the determining of the reference block corresponding to the current block and included in the reconstructed pixel region comprises:
determining a motion vector of the current block, based on motion vector information obtained from the bitstream; and
determining the reference block indicated by the motion vector of the current block and included in the reconstructed pixel region.
